# EUROPEAN PATENT APPLICATION

(11) **EP 4 827 179 A1**
(43) Date of publication of application: **21.10.2026**
(21) Application number: 24902480.3
(22) Date of filing: 13.11.2024
(51) Int. Cl.: H04W 52/02

(54) **COMMUNICATION DEVICE, COMMUNICATION CONTROL METHOD, ELECTRONIC DEVICE, AND READABLE MEDIUM**

(30) Priority: 12.12.2023 CN 202311723732
(71) Applicant: Huawei Technologies Co., Ltd., Shenzhen, Guangdong 518129 (CN)
(72) Inventor: LI, Jianping, Shenzhen, Guangdong 518129 (CN); PENG, Zhongwei, Shenzhen, Guangdong 518129 (CN); ZENG, Yixing, Shenzhen, Guangdong 518129 (CN); KUANG, Shuijin, Shenzhen, Guangdong 518129 (CN); LI, Xinzhi, Shenzhen, Guangdong 518129 (CN)
(74) Representative: Huawei European IPR
(86) International application number: PCT/CN2024/131845
(87) International publication number: WO 2025/124057

(57) **Abstract**

This application relates to the field of wireless communication network technologies, and discloses a communication device, a communication control method, an electronic device, and a readable medium. In the communication device in this application, a power splitting circuit is added between a power amplifier and an antenna array of a base station antenna feed system. The power splitting circuit is configured to: when one of two power amplifiers is turned off, equally split one signal sent by the other power amplifier that is not turned off into two signal paths, so that an antenna element and a port of a feed network that correspond to the turned-off power amplifier can obtain the signal, thereby enabling a mobile device in a cell served by the antenna element corresponding to the turned-off power amplifier to maintain normal communication.

## Description

This application claims priority to Chinese Patent Application No. 202311723732.9, filed with the China National Intellectual Property Administration on December 12, 2023 and entitled "COMMUNICATION DEVICE, COMMUNICATION CONTROL METHOD, ELECTRONIC DEVICE, AND READABLE MEDIUM", which is incorporated herein by reference in its entirety.

### TECHNICAL FIELD

This application relates to the field of wireless communication network technologies, and in particular, to a communication device, a communication control method, an electronic device, and a readable medium.

### BACKGROUND

A wireless communication system is an important means for enabling communication functionality of electronic devices. A base station (base station) is an important component of the wireless communication system, and is used to provide wireless signal coverage and communication services. A coverage area of the base station is related to its transmit power. Usually, greater transmit power of a base station indicates a wider coverage area and better communication quality for users. To ensure a coverage area and communication quality, a base station may operate continuously at maximum transmit power. However, when a quantity of users is small, the user distribution range is also small, resulting in a decrease in the total quantity of signals required within the coverage area of the base station, and a reduction in signal transmission loss. In this case, even if the base station reduces transmit power, communication quality for users within the coverage area can still be ensured, while operating at maximum transmit power would waste a significant amount of electrical energy.

### SUMMARY

To address the problem of excessive electrical energy consumption caused by a base station operating continuously at maximum transmit power, embodiments of this application provide a communication device, a communication control method, an electronic device, and a readable medium.

According to a first aspect, an embodiment of this application provides a communication device, including a first power amplifier unit, a first distribution unit, and a first feed unit, where the first power amplifier unit includes a first power amplifier and a second power amplifier; the first distribution unit is connected to a first feed network and a second feed network in the first feed unit; and the first distribution unit is configured to: when the first power amplifier is turned off, split a signal output by the second power amplifier into two signal paths, and input the two signal paths to the first feed network and the second feed network in the first feed unit.

In embodiments of this application, the signal output by the second power amplifier may be equally split into two signal paths via the first distribution unit. In some other embodiments, the signal output by the second power amplifier may be unequally split into two signal paths via the first distribution unit.

In embodiments of this application, the first distribution unit may equally split one signal sent by the other power amplifier (the second power amplifier) that is not turned off into two signal paths, so that an antenna element and a port of a feed network that correspond to the turned-off power amplifier can obtain the signal. In this way, a mobile device in a cell served by the antenna element corresponding to the turned-off power amplifier can normally communicate.

It may be understood that the first distribution unit may be an energy-saving network in embodiments of this application, and the first feed unit may be a feed network in embodiments of this application.

In a possible implementation, the first distribution unit includes a 90° hybrid coupler, and the 90° hybrid coupler is configured to equally split a signal output by the second power amplifier into two signal paths, and input the two signal paths to the first feed network and the second feed network in the first feed unit, respectively.

In a possible implementation, when the first power amplifier is turned off, the 90° hybrid coupler is in a connected state, and when the 90° hybrid coupler is in the connected state, a signal output by the second power amplifier is equally split into two signal paths, and the two signal paths are respectively input to the first feed network and the second feed network in the feed unit. The 90° hybrid coupler is further in a disconnected state when both the first power amplifier and the second power amplifier operate, and when the 90° hybrid coupler is in the disconnected state, a signal output by the first power amplifier is input to the first feed network, and a signal output by the second power amplifier is input to the second feed network.

It may be understood that, when the first power amplifier is turned off, the 90° hybrid coupler is in an energy-saving state, and when the 90° hybrid coupler is in the energy-saving state, a signal for turning on the power amplifier may be equally split into two paths, so that the antenna element and the port of the feed network that correspond to the turned-off power amplifier may obtain the signal. When both the first power amplifier and the second power amplifier operate, the 90° hybrid coupler is in a non-energy-saving state, and when the 90° hybrid coupler is in a non-energy-saving state, a signal output by the first power amplifier may be input to the first feed network, and a signal output by the second power amplifier may be input to the second feed network.

In a possible implementation, the 90° hybrid coupler further includes a first switch and a second switch. When the first power amplifier is turned off and the second power amplifier is in operation: a voltage across the first switch is greater than a turn-on voltage of the first switch, and the first switch is in a turned-on state, and a voltage across the second switch is greater than a turn-on voltage of the second switch, and the second switch is in a turned-on state; or when both the first power amplifier and the second power amplifier are in operation: a voltage across the first switch is less than or equal to a turn-on voltage of the first switch, and the first switch is in a turned-off state, and a voltage across the second switch is less than or equal to a turn-on voltage of the second switch, and the second switch is in a turned-off state.

In some embodiments, the communication device has a control module. The control module may obtain an electrical signal sent by the first power amplifier unit. When it is determined, based on the electrical signal, that only one power amplifier is turned on, a turn-on signal is sent to the first switch and the second switch to control the first switch and the second switch to be in a turned-on state; and when it is determined that both the two power amplifiers are turned on, a turn-off signal may be sent to the first switch and the second switch to control the first switch and the second switch to be in a turned-off state.

In a possible implementation, the first switch and the second switch include at least one of a metal-oxide-semiconductor field-effect transistor (metal-oxide-semiconductor field-effect transistor, MOSFET), a diode, a micro-electro-mechanical system, or a reed switch.

In a possible implementation, the apparatus further includes an antenna array, where the antenna array includes a first-direction antenna element and a second-direction antenna element, and the first-direction antenna element and the second-direction antenna element include a plurality of antennas.

In embodiments of this application, the first-direction antenna element may be an antenna element fed by a feed network in a horizontal dimension, and the second-direction antenna element may be an antenna element fed by a feed network in a vertical dimension.

In a possible implementation, the first power amplifier and the second power amplifier in the first power amplifier unit are connected to a first input end and a second input end of the first distribution unit, respectively; the first feed network is connected to a first output end of the first distribution unit; and the second feed network is connected to a second output end of the first distribution unit.

It may be understood that, the first feed network and the second feed network in the first feed unit are equivalent to the feed network in the horizontal dimension, that is, the first distribution unit is disposed between the first power amplifier unit and the feed network in the horizontal dimension.

In a possible implementation, a second feed unit may be further included. The second feed unit includes a third feed network and a fourth feed network, the third feed network is connected to the first feed network, the fourth feed network is connected to the second feed network, the first feed network and the second feed network are connected to different first-direction antenna elements in the antenna array, respectively, and the third feed network and the fourth feed network are connected to different second-direction antenna elements in the antenna array, respectively.

It may be understood that the third feed network and the fourth feed network in the second feed unit are equivalent to a feed network in a vertical dimension.

In a possible implementation, a third feed unit is further included. The third feed unit includes a fifth feed network and a sixth feed network; the first power amplifier in the first power amplifier unit is connected to the fifth feed network, the fifth feed network is connected to a first input end of the first distribution unit, the first feed network is connected to a first output end of the first distribution unit; and the second power amplifier in the first power amplifier unit is connected to the sixth feed network, the sixth feed network is connected to a second input end of the first distribution unit, and the first feed network is connected to a second output end of the first distribution unit.

It may be understood that the fifth feed network and the sixth feed network in the third feed unit are equivalent to the feed network in the horizontal dimension, and the first feed network and the second feed network in the first feed unit are equivalent to the feed network in the vertical dimension, that is, the first distribution unit is disposed between the feed network in the horizontal dimension and the feed network in the vertical dimension.

In a possible implementation, the first feed network and the second feed network are connected to different second-direction antenna elements in the antenna array, respectively, and the fifth feed network and the sixth feed network are connected to different first-direction antenna elements in the antenna array, respectively.

In a possible implementation, the apparatus further includes a second distribution unit and a fourth feed unit, where the fourth feed unit includes a seventh feed network and an eighth feed network; the first power amplifier in the first power amplifier unit is connected to a first input end of the first distribution unit, and the second power amplifier in the first power amplifier unit is connected to a second input end of the first distribution unit; the first feed network in the first feed unit is connected to a first output end of the first distribution unit, and the second feed network in the first feed unit is connected to a second output end of the first distribution unit; the first feed network in the first feed unit is connected to a first input end of the second distribution unit, and the second feed network in the first feed unit is connected to a second input end of the second distribution unit; and the seventh feed network in the fourth feed unit is connected to a first output end of the second distribution unit, and the eighth feed network in the fourth feed unit is connected to a second output end of the second distribution unit.

It may be understood that the seventh feed network and the eighth feed network in the fourth feed unit are equivalent to the feed network in the vertical dimension, and the first feed network and the second feed network in the first feed unit are equivalent to the feed network in the horizontal dimension, that is, the first distribution unit is disposed between the first power amplifier unit and the feed network in the horizontal dimension, and the second distribution unit is disposed between the feed network in the horizontal dimension and the feed network in the vertical dimension.

In a possible implementation, the first feed network and the second feed network are connected to different first-direction antenna elements in the antenna array, respectively, and the seventh feed network and the eighth feed network are connected to different second-direction antenna elements in the antenna array, respectively.

In a possible implementation, the first distribution unit includes a phase shifter.

For example, the first output end of the first distribution unit is connected to the phase shifter.

In a possible implementation, the second distribution unit includes a phase shifter.

For example, the first output end of the second distribution unit is connected to the phase shifter.

According to a second aspect, an embodiment of this application provides a communication control method, applied to any communication device provided in the first aspect and the possible implementations of the first aspect, including: obtaining a quantity of users within a signal coverage area of the communication device; and turning off some a part of amplifiers in the first power amplifier unit based on the quantity of users, where the first power amplifier unit includes the first power amplifier and the second power amplifier; and when the first power amplifier is turned off, splitting, via the first distribution unit, a signal output by the second power amplifier into two signal paths, and inputting the two signal paths to the first feed network and the second feed network in the first feed unit, respectively.

In embodiments of this application, a turn-on status of a power amplifier in the base station may be controlled based on a quantity of current users within the coverage area of the base station antenna, so that transmit power of the base station antenna is flexibly configured based on the quantity of users. For example, a part of power amplifiers are turned off when there are a small quantity of users, thereby reducing energy consumption. The first distribution unit distributes output power of one or two power amplifiers to the first feed unit, so that an antenna element corresponding to a turned-off power amplifier may also receive a signal, the antenna array always operates as a full array, and an antenna beam coverage area remains consistent before and after, thereby ensuring user communication quality while achieving energy saving.

According to a third aspect, an embodiment of this application provides an electronic device including: a memory, configured to store instructions to be executed by one or more processors of the electronic device; and a processor, being one of the one or more processors of the electronic device, configured to implement any communication control method provided in the second aspect and the possible implementations of the second aspect.

According to a fourth aspect, an embodiment of this application provides a readable medium, the readable medium stores instructions; and when the instructions are executed on an electronic device, the electronic device is enabled to implement any communication control method provided in the second aspect and the possible implementations of the second aspect.

### BRIEF DESCRIPTION OF DRAWINGS

FIG. 1a is a diagram of a scenario in which a base station 100 communicates with a mobile device A according to an embodiment of this application;
FIG. 1b is a diagram of a structure of a base station 100 according to an embodiment of this application;
FIG. 2a is a diagram of a structure of an antenna array according to an embodiment of this application;
FIG. 2b is a diagram of another structure of an antenna array according to an embodiment of this application;
FIG. 2c is a diagram of sending a signal by a power amplifier to an antenna element according to an embodiment of this application;
FIG. 3a is a diagram of a structure of a communication device according to an embodiment of this application;
FIG. 3b is a diagram of another structure of a communication device according to an embodiment of this application;
FIG. 4a is a diagram of a structure of a communication device in which an energy-saving network a1 is disposed between a power amplifier and a feed network in a horizontal dimension according to an embodiment of this application;
FIG. 4b is a diagram of a circuit structure of a communication device in which an energy-saving network a1 is disposed between a power amplifier and a feed network in a horizontal dimension according to an embodiment of this application;
FIG. 5a is a diagram of a structure of a communication device in which an energy-saving network b1 is disposed between a feed network in a horizontal dimension and a feed network in a vertical dimension according to an embodiment of this application;
FIG. 5b is a diagram of a circuit structure of a communication device in which an energy-saving network b1 is disposed between a feed network in a horizontal dimension and a feed network in a vertical dimension according to an embodiment of this application;
FIG. 6a is a diagram of a structure of a communication device in which an energy-saving network a1 is disposed between a power amplifier and a feed network in a horizontal dimension, and an energy-saving network b1 is disposed between the feed network in the horizontal dimension and a feed network in a vertical dimension according to an embodiment of this application;
FIG. 6b is a diagram of a circuit structure of a communication device in which an energy-saving network a1 is disposed between a power amplifier and a feed network in a horizontal dimension, and an energy-saving network b1 is disposed between the feed network in the horizontal dimension and a feed network in a vertical dimension according to an embodiment of this application;
FIG. 7a is a diagram of a structure of a communication device in which an energy-saving network a1 and an energy-saving network a2 are disposed between a power amplifier and a feed network in a horizontal dimension, and an energy-saving network b1, an energy-saving network b2, ..., and an energy-saving network bp are disposed between the feed network in the horizontal dimension and a feed network in a vertical dimension according to an embodiment of this application;
FIG. 7b is a diagram of a circuit structure of a communication device in which an energy-saving network a1 and an energy-saving network a2 are disposed between a power amplifier and a feed network in a horizontal dimension, and an energy-saving network b1, an energy-saving network b2, ..., and an energy-saving network bp are disposed between the feed network in the horizontal dimension and a feed network in a vertical dimension according to an embodiment of this application;
FIG. 8 is a diagram of a structure of an energy-saving network 400 according to an embodiment of this application;
FIG. 9a is a diagram of an energy-saving network in a non-energy-saving state according to an embodiment of this application;
FIG. 9b is a diagram of an energy-saving network in an energy-saving state according to an embodiment of this application;
FIG. 10 is a diagram of a structure in which an output end of an energy-saving network a1 is connected to a phase shifter 3-1 according to an embodiment of this application;
FIG. 11a is a diagram in which an energy-saving network a1 is disposed between a power amplifier and a feed network in a horizontal dimension, and the energy-saving network a1 is in a non-energy-saving state according to an embodiment of this application;
FIG. 11b is a diagram in which an energy-saving network a1 is disposed between a power amplifier and a feed network in a horizontal dimension, and the energy-saving network a1 is in an energy-saving state according to an embodiment of this application;
FIG. 12 is a diagram of a waveform according to an embodiment of this application;
FIG. 13a is a diagram in which an energy-saving network b1 is disposed between a feed network in a horizontal dimension and a feed network in a vertical dimension, and the energy-saving network b1 is in a non-energy-saving state according to an embodiment of this application;
FIG. 13b is a diagram in which an energy-saving network b1 is disposed between a feed network in a horizontal dimension and a feed network in a vertical dimension, and the energy-saving network b1 is in an energy-saving state according to an embodiment of this application;
FIG. 14a is a diagram in which an energy-saving network a1 is disposed between a power amplifier and a feed network in a horizontal dimension, an energy-saving network b1 is disposed between the feed network in the horizontal dimension and a feed network in a vertical dimension, and both the energy-saving network a1 and the energy-saving network b1 are in a non-energy-saving state according to an embodiment of this application;
FIG. 14b is a diagram in which an energy-saving network a1 is disposed between a power amplifier and a feed network in a horizontal dimension, an energy-saving network b1 is disposed between the feed network in the horizontal dimension and a feed network in a vertical dimension, the energy-saving network a1 is in an energy-saving state, and the energy-saving network b1 is in a non-energy-saving state according to an embodiment of this application;
FIG. 15 is a diagram in which an energy-saving network a1 and an energy-saving network a2 are disposed between a power amplifier and a feed network in a horizontal dimension, and an energy-saving network b2..., and an energy-saving network bp are disposed between the feed network in the horizontal dimension and a feed network in a vertical dimension according to an embodiment of this application;
FIG. 16a is a diagram in which an energy-saving network a1 is disposed between a power amplifier and a feed network in a horizontal dimension, and the energy-saving network a1 is in a non-energy-saving state according to an embodiment of this application;
FIG. 16b is a diagram in which an energy-saving network a1 is disposed between a power amplifier and a feed network in a horizontal dimension, and the energy-saving network a1 is in an energy-saving state according to an embodiment of this application;
FIG. 17 is a diagram of a base station antenna feed system according to an embodiment of this application;
FIG. 18 is a diagram of a structure of an interior of an antenna according to an embodiment of this application; and
FIG. 19 is a schematic flowchart of a communication control method according to an embodiment of this application.

### DESCRIPTION OF EMBODIMENTS

Illustrative embodiments of this application include but are not limited to a communication device, a communication control method, an electronic device, and a readable medium.

The following first describes a base station.

The base station is an important component in a wireless communication system, and is configured to communicate with a mobile device. A main function of the base station is to receive a wireless signal sent by a mobile device within a coverage area of the base station, and send a wireless signal to another mobile device within the coverage area of the base station, that is, provide a communication service within the coverage area of the base station.

The base station may be a device in an access network that communicates with the mobile device over an air interface via one or more sectors. The base station includes a baseband unit, a radio frequency unit, and a base station antenna feed system. The mobile device may be a device providing a user with voice and/or data connectivity, or a handheld device having a wireless connection function, or a processing device connected to a wireless modem. For example, the mobile device may include user equipment (user equipment, UE), a wireless terminal device, a mobile radio station, a mobile terminal device, a subscriber unit (subscriber unit), a subscriber station (subscriber station), a mobile station (mobile station), a mobile console (mobile), a remote station (remote station), an access point (access point, AP), a remote terminal (remote terminal), an access terminal (access terminal), a user terminal (user terminal), a user agent (user agent), or a user equipment (user device).

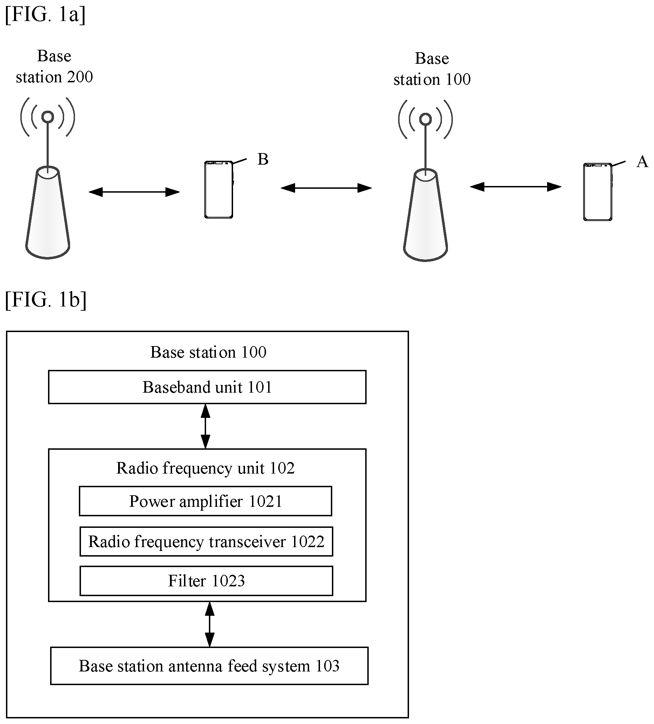

The following describes a working principle of a base station 100 with reference to an application scenario shown in FIG. 1a and a structure of the base station 100 shown in FIG. 1b.

S1: A base station antenna feed system 103 of the base station 100 receives a signal sent by a mobile device A, for example, a signal sent by a mobile phone, and sends the signal to a radio frequency unit 102 for processing.

For example, when the mobile device A dials a mobile device B, the mobile device A first connects, based on a wireless signal, to the base station 100 nearest to the mobile device A, and then performs signaling exchange with the base station 100 to establish a communication connection. Then, the mobile device A may send a dialing request to the base station antenna feed system 103 of the nearest base station 100, where the dialing request may carry a communication request signal requesting to communicate with the mobile device B.

S2: The radio frequency unit 102 includes a power amplifier (power amplifier) 1021, a radio frequency transceiver 1022, and a filter 1023. The filter 1023 in the radio frequency unit 102 may receive the communication request signal sent by the mobile device A, perform preliminary processing on the communication request signal, for example, perform filtering processing on the communication request signal, and send the communication request signal to a baseband unit 101. For example, the filter 1023 may receive the communication request signal sent by the mobile device A, filter out a signal that does not meet a processing frequency range of the baseband unit 101, and send a filtered signal to the baseband unit 101.

S3: After receiving the signal, the baseband unit 101 processes the signal, for example, modulates and encodes the received signal according to a preset data transmission protocol. In a process of processing the signal by the baseband unit 101, information in the signal may be compressed, encoded, and segmented into small data packets, thereby improving transmission efficiency of the processed information transmitted by the radio frequency unit 102. Then, the baseband unit 101 returns the processed information to the radio frequency transceiver 1022. A data transmission protocol used by the baseband unit 101 specifically depends on a communication standard, and the data transmission protocol may include a packet data convergence protocol (packet data convergence protocol, PDCP), a radio link control (radio link control, RLC) protocol, and a medium access control (medium access control, MAC) protocol. These protocols ensure reliable data transmission in a wireless environment.

For example, the baseband unit 101 performs modulation and coding processing on the received communication request signal that is sent by the mobile device A and that is used for communication with the mobile device B, and returns the communication request signal to the radio frequency transceiver 1022 of the radio frequency unit 102.

It may be understood that, after the baseband unit 101 processes the communication request signal that is sent by the mobile device A and that is used for communication with the mobile device B, the baseband unit 101 may send the processed communication request signal to a core network via a core gateway of the base station 100. After determining that the processed communication request signal meets a call rule, the core network searches for a location of the mobile device B, determines, based on the location of the mobile device B, a base station 200 nearest to the mobile device B, and determines how to connect a call to the base station 200 nearest to the mobile device B.

For example, if the mobile device A and the mobile device B are located in different base station coverage areas, the core network coordinates communication between the two base stations, for example, switches a call of the mobile device A to the base station 200 in which the mobile device B is located. Once the core network determines a call path, the core network establishes a call connection, to allow the mobile device A to communicate with the mobile device B, that is, to allow the mobile device A to transmit a sound signal to the base station 200 nearest to the mobile device B via the base station in which the mobile device A is located, so that the sound signal from the mobile device A is transmitted to the base station 200 nearest to the mobile device B via the base station 100 in which the mobile device A is located. Then, the base station 200 nearest to the mobile device B sends the sound signal from the mobile device A to the mobile device B. Similarly, a sound signal from the mobile device B may also be transmitted to the mobile device A.

S4: After receiving the signal sent by the baseband unit 101, the radio frequency transceiver 1022 allocates a frequency resource to the signal, and sends the received signal and the frequency resource to the power amplifier 1021.

It may be understood that the signal sent by the radio frequency transceiver 1022 is a low-power signal. Allocation policies by which the radio frequency transceiver 1022 allocates frequency resources to signals may be classified according to different standards. For example, frequency resources are allocated based on time domain and frequency domain. In time domain, frequency resources may be allocated by using technologies such as time division multiple access (time division multiple access, TDMA) and code division multiple access (code division multiple access, CDMA). In frequency domain, frequency resources may be allocated by using technologies such as frequency division multiple access (frequency division multiple access, FDMA) and orthogonal frequency division multiple access (orthogonal frequency division multiple access, OFDMA).

S5: After receiving the low-power signal sent by the radio frequency transceiver 1022, the power amplifier 1021 amplifies the low-power signal sent by the radio frequency transceiver 1022 to obtain a high-power signal, and sends the high-power signal to the base station antenna feed system 103.

For example, the power amplifier 1021 amplifies power of the low-power signal sent by the radio frequency transceiver 1022 to obtain a high-power signal, so that the high-power signal can be propagated to the base station 200 nearest to the mobile device B.

S6: An antenna in the base station antenna feed system 103 propagates a signal to a target area at a specific frequency, power, and direction. The base station antenna feed system 103 includes a feed network and an antenna array.

The feed network is configured to perform beamforming on a transmitted signal, including changing a beam width, a shape, and a beam direction of a beam, and transmitting the signal to the antenna array. The feed network includes a feed network in a vertical dimension and a feed network in a horizontal dimension. The feed network in the horizontal dimension is configured to feed each column of antenna elements. The feed network in the vertical dimension is configured to feed radiating elements that are vertically arranged in each antenna element. The feed network in the vertical dimension includes at least one feed network, and the feed network in the horizontal dimension includes at least one feed network. The feed network in the vertical dimension and the feed network in the horizontal dimension may be connected in series. It may be understood that the feed network in the horizontal dimension may transmit a signal to the feed network in the vertical dimension, and then transmit the signal to the antenna array through the feed network in the vertical dimension.

The antenna array is a system including a plurality of antennas. A phase and an amplitude of each antenna may be controlled, so that radiation directions of the antenna array are more centralized, thereby improving a signal transmission distance and an anti-interference capability. The antenna array may further implement directional radiation, that is, radiate a signal only in a specific direction, thereby reducing interference to other directions.

For example, an antenna in the antenna feed system 103 propagates, at a specific frequency and power, a high-power signal to a base station nearest to the mobile device B.

It may be understood that, after receiving the high-power signal, the base station nearest to the mobile device B may decode and play voice data sent by the mobile device A through a similar inverse process.

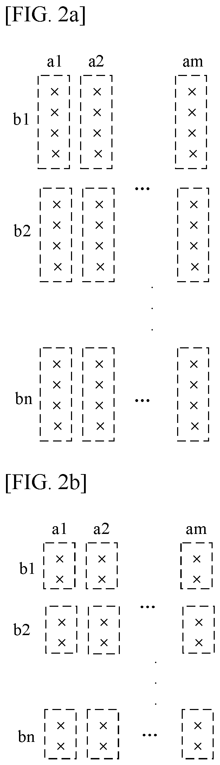

In some embodiments, an antenna array may be split into a plurality of array antennas (or referred to as antenna elements). For example, an antenna array is split into n×m array antennas, and each array antenna includes a specific quantity of radiating elements. For example, as shown in FIG. 2a, each array antenna includes four radiating elements, and as shown in FIG. 2b, each array antenna includes two radiating elements, where the radiating element is a basic structural unit of an antenna and is configured to receive and transmit a signal.

It may be understood that a quantity of array antennas included in the antenna array and a quantity of radiating elements included in each array antenna may be split according to an actual situation. This is not specifically limited herein.

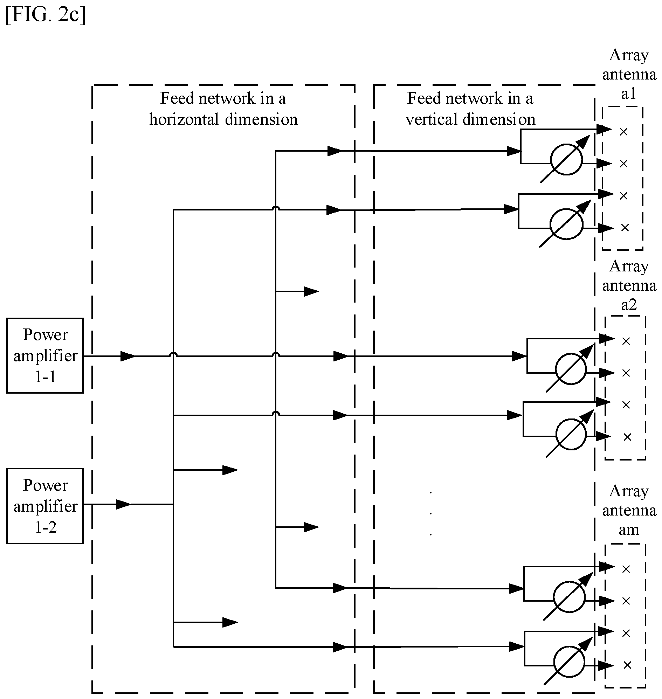

With reference to FIG. 2c, the following describes a method for feeding an array antenna a1 in FIG. 2a through a feed network.

As shown in FIG. 2c, a power amplifier 1-1 is connected to an input end of a feed network in a horizontal dimension, an output end of the feed network in the horizontal dimension is connected to an input end of a feed network in a vertical dimension, and an output end of the feed network in the vertical dimension is connected to the array antenna a1.

When sending a signal, the power amplifier 1-1 sequentially sends the signal to the feed network in the horizontal dimension and the feed network in the vertical dimension, to feed the array antenna a1 through the feed network in the horizontal dimension and the feed network in the vertical dimension.

It may be understood that a method for feeding one row and m columns of array antennas in FIG. 2a through the feed network is the same as the method for feeding the array antenna a1 through the feed network. Details are not described herein again. If n rows and m columns of array antennas are fed, n groups of structures shown in FIG. 2c are required.

It may be understood that feed networks in the horizontal dimension may be connected in series or in parallel. Similarly, feed networks in the vertical dimension may be connected in series or in parallel. Each feed network has a plurality of input ports and output ports. To be specific, each feed network in the horizontal dimension is connected to at least one feed network in the vertical dimension, and each feed network in the vertical dimension feeds at least one array antenna.

Because the power amplifier is a device that has the highest power consumption and has the largest power loss in the base station, in some embodiments, to resolve address the problem of excessive electrical energy consumption caused by a base station, conversion efficiency of the power amplifier may be improved by increasing a bandwidth of the power amplifier, and a power loss for the power amplifier converting a low-power signal into a high-power signal is reduced, thereby reducing electrical energy consumed by the base station.

For example, a "golden efficiency improvement solution" is used to increase a bandwidth of the power amplifier, that is, the bandwidth of the power amplifier (for example, a Doherty amplifier) is increased by combining a crest factor reduction (crest factor reduction, CFR) technology and a digital pre-distortion (digital pre-distortion, DPD) technology, thereby improving conversion efficiency of the power amplifier and reducing electrical energy consumed when the power amplifier converts a low-power signal into a high-power signal. In some embodiments, a GaN power amplifier with higher conversion efficiency may also be used to replace an original power amplifier (for example, an LDMOS power amplifier) in the base station.

However, although this method improves the conversion efficiency of the power amplifier and reduces the electrical energy consumed by the base station, the method for improving the efficiency of the power amplifier is highly complex, costly, and technically demanding.

In some other embodiments, electrical energy consumed by the base station may be reduced by turning off a part of power amplifiers when a quantity of users is relatively small. For example, a quantity of current users in each sector within a coverage area of the base station is counted; the total quantity of current users within the coverage area of the base station is calculated based on the quantity of current users in each sector; a quantity of power amplifiers that need to be turned on in each sector within the coverage area of the base station is determined based on the total quantity of current users and a preset policy; and then more power amplifiers are determined to be turned on or redundant power amplifiers are determined to be turned off based on the quantity of power amplifiers. For example, when the quantity of users is large, all power amplifiers in the sector are turned on, so that the base station operates at maximum transmit power. When the quantity of users is small, a part of power amplifiers in the sector are turned off to reduce transmit power of the base station, thereby reducing the transmit power and consumed electrical energy of the base station and achieving a purpose of energy saving.

The preset policy may be as follows: when the total quantity of current users falls within a first user interval, one quarter of power amplifiers are turned off; when the total quantity of current users falls within a second user interval, a half of power amplifiers are turned off; when the total quantity of current users falls within a third user interval, three quarters of power amplifiers are turned off; and when the total quantity of current users falls within a fourth user interval, no power amplifiers are turned off. A lower limit value of the fourth interval is greater than an upper limit value of the first interval, a lower limit value of the first interval is greater than an upper limit value of the second interval, and a lower limit value of the second interval is greater than an upper limit value of the third interval.

It may be understood that a cell served by the base station may be a 360-degree omnidirectional cell, or may be a plurality of cells. For example, a base station may be disposed in a center of a cell, and an omnidirectional antenna is used to form a circular coverage area, to implement 360-degree omnidirectional signal coverage. Alternatively, one base station may serve three cells, and implement 120-degree signal coverage for each cell, so that 360-degree omnidirectional signal coverage may be implemented through the three base stations. Each cell may be further split into a plurality of sectors (usually, one cell has one/two/three sectors, or even more). Each sector may provide an independent signal coverage service and a transmission service. Each sector includes at least one array antenna. A power amplifier corresponding to each array antenna may perform power amplification, to ensure the signal coverage area and communication quality. In addition, a power amplifier corresponding to each sector is connected to a base station antenna feed system through a corresponding port, to support multi-channel communication.

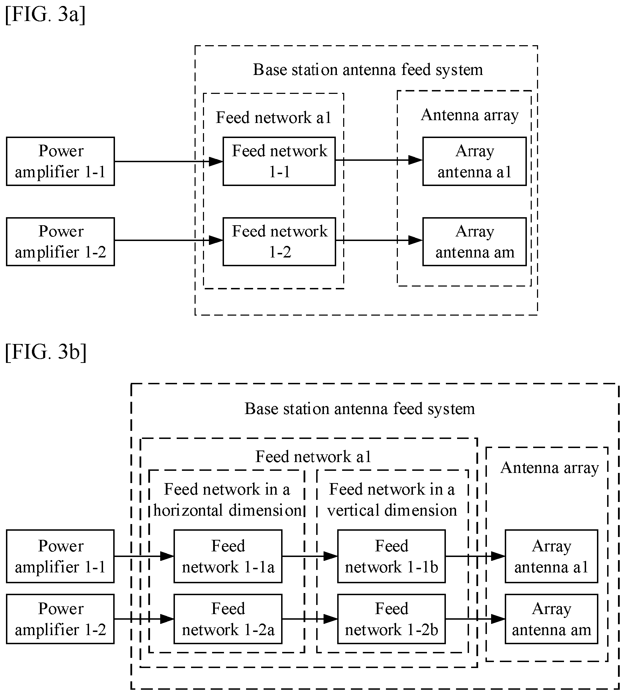

For example, a sector A1 includes an array antenna a1, a sector A2 includes an array antenna a2, and a feed network a1 includes a feed network 1-1 and a feed network 1-2. As shown in FIG. 3a, the power amplifier 1-1 is connected to the feed network 1-1 of the base station antenna feed system, the feed network 1-1 is connected to the array antenna a1, to output a high-power signal to a first area corresponding to the array antenna a1 in the sector A1, a power amplifier 1-2 is connected to the feed network 1-2 of the base station antenna feed system, and the feed network 1-2 is connected to an array antenna am, to output a high-power signal to a second area corresponding to the array antenna am in the sector A2.

In some embodiments, as shown in FIG. 3b, a feed network in a horizontal dimension includes a feed network 1-1a and a feed network 1-2a, and a feed network in a vertical dimension includes a feed network 1-1b and a feed network 1-2b.

However, in the scenario mentioned above in which a part of power amplifiers are turned off when the quantity of users is small, because turning off the part of power amplifiers makes a port of a base station antenna feed system corresponding to the power amplifier in a turned-off state unable to obtain output power, the coverage area of the base station is reduced, and normal communication of users within the coverage area of the antenna corresponding to the power amplifier in the turned-off state cannot be ensured. Therefore, before a power amplifier is turned off, users within a coverage area of an antenna corresponding to the power amplifier to be in a turned-off state need to be transferred to a coverage area of another power amplifier in a turned-on state through inter-frequency handover. For example, when the power amplifier 1-2 is turned off, because the array antenna a2 and an array antenna a4 cannot obtain a signal, a quantity of signals in a second area corresponding to the array antenna a2 and the array antenna a4 in the sector A2 decreases, and user communication quality is reduced. Therefore, a user in the second area corresponding to the array antenna a2 and the array antenna a4 in the sector A2 needs to be transferred to a first area corresponding to the sector A1 through inter-frequency handover or the like. This solution is complex.

To resolve the problem that turning off a part of power amplifiers reduces a coverage area of a base station, causing a part of users to be unable to normally communicate, an embodiment of this application provides a communication control method. Specifically, when electrical energy consumed by a base station is reduced by turning off a part of power amplifiers, a power splitting circuit with the function of equally splitting a signal, for example, an energy-saving network of a 90° hybrid coupler structure, may be added between the power amplifier and an antenna array of a base station antenna feed system. When one of two power amplifiers is turned off, the power splitting circuit equally splits one signal, sent by the other power amplifier that is not turned off, into two signal paths, so that an array antenna and a port of a feed network that correspond to the turned-off power amplifier can obtain the signal, thereby enabling a mobile device in a cell served by the antenna element corresponding to the turned-off power amplifier to maintain normal communication.

It may be understood that the 90° hybrid coupler is a four-port device, and includes input ends (a port 1 and a port 2) and output ends (a port 3 and a port 4). When the 90° hybrid coupler is balanced, an electric potential difference between two sides (the port 3 and the port 4) of the hybrid coupler is 0, and the 90° hybrid coupler may equally split one signal into two signal paths, and also equally splits signal power.

It may be understood that, when the base station has a plurality of power amplifiers, two power amplifiers may form a group, and an energy-saving network is disposed for each group of power amplifiers, to ensure that in each group of power amplifiers, one power amplifier is turned off for energy saving, and a signal of the other power amplifier may be equally split into two paths via the energy-saving network, so that an array antenna and a port of a feed network that correspond to the turned-off power amplifier can obtain the signal.

In embodiments of this application, the signal output by the turned-on power amplifier may be equally split into two signal paths via the energy-saving network. In some other embodiments, the signal output by the turned-on power amplifier may be unequally split into two signal paths via the energy-saving network.

As described above, the feed network includes a feed network in a vertical dimension and a feed network in a horizontal dimension. The following specifically describes the communication control method in this application with reference to FIG. 3b in which the feed network in the vertical dimension and the feed network in the horizontal dimension that are connected in series.

As shown in FIG. 3b, the feed network in the vertical dimension includes the feed network 1-1b and the feed network 1-2b, and the feed network in the horizontal dimension includes the feed network 1-1a and the feed network 1-2a. An output end of the power amplifier 1-1 is connected to an input end of the feed network 1-1a, an output end of the feed network 1-1a is connected to an input end of the feed network 1-1b, and an output end of the feed network 1-1b is connected to a port of the array antenna a1. An output end of the power amplifier 1-2 is connected to an input end of the feed network 1-2a, an output end of the feed network 1-2a is connected to an input end of the feed network 1-2b, and an output end of the feed network 1-2b is connected to a port of the array antenna am.

In some embodiments, the feed network mainly includes phase shifters. As shown in FIG. 2c, the feed network in the vertical dimension includes a plurality of phase shifters. The phase shifter may not only be configured to move a phase of a signal, but also be configured to change an amplitude and a frequency of the signal. The phase shifter may move a phase of a signal by a specific angle, to change a phase difference of the signal. In addition, the phase shifter may be further configured to implement the function of a filter, and implement a filtering effect by changing a phase and an amplitude of a signal.

In some embodiments, a method for adding an energy-saving network between a power amplifier and an antenna array of a base station antenna feed system may be adding an energy-saving network between the power amplifier and a feed network in a horizontal dimension, but not adding an energy-saving network between the feed network in the horizontal dimension and a feed network in a vertical dimension. In some other embodiments, an energy-saving network may not be added between the power amplifier and the feed network in the horizontal dimension, and an energy-saving network may be added between the feed network in the horizontal dimension and the feed network in the vertical dimension. Alternatively, in some other embodiments, an energy-saving network is added between the power amplifier and the feed network in the horizontal dimension, and an energy-saving network is also added between the feed network in the horizontal dimension and the feed network in the vertical dimension.

The following describes the communication control method in this application by using an example in which the energy-saving network a1 is added between the power amplifier and the feed network in the horizontal dimension.

In this application, one input end (port 1) of the energy-saving network a1 is connected to an output end of one power amplifier in a group of power amplifiers, and the other input end (port 2) of the energy-saving network a1 is connected to an output end of the other power amplifier; and one output end (port 3) of the energy-saving network a1 is connected to an input end of a feed network in a horizontal dimension of the one power amplifier, and the other output end (port 4) of the energy-saving network a1 is connected to an input end of a feed network in the horizontal dimension of the other power amplifier.

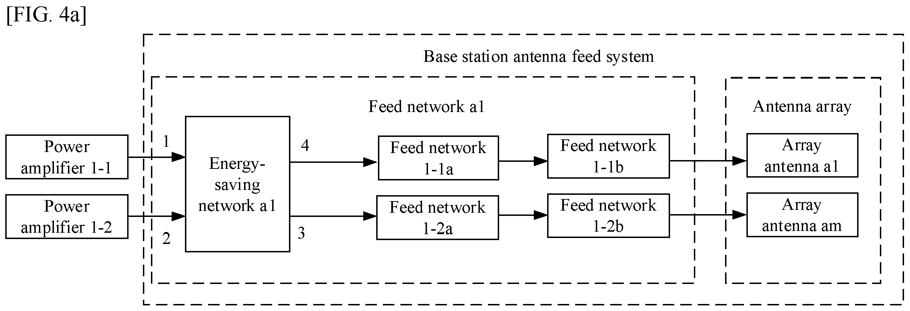

As shown in FIG. 4a, the power amplifier 1-1 is connected to one input end (port 1) of the energy-saving network a1, the power amplifier 1-2 is connected to the other input end (port 2) of the energy-saving network a1, one output end (port 3) of the energy-saving network a1 is connected to the feed network 1-2a, and the other output end (port 4) of the energy-saving network a1 is connected to the feed network 1-1a. An output end of the feed network 1-1a is connected to an input end of the feed network 1-1b, and an output end of the feed network 1-1b is connected to a port of the array antenna a1. An output end of the feed network 1-2a is connected to an input end of the feed network 1-2b, and an output end of the feed network 1-2b is connected to a port of the array antenna am.

When the power amplifier 1-1 is turned off, the energy-saving network a1 obtains an output signal of a power amplifier (power amplifier 1-2) in a turned-on state, equally splits the output signal into two signal paths, and then sends the two signal paths to the feed network 1-1a and the feed network 1-2a of the base station antenna feed system through the output ends of the energy-saving network a1. In this way, each feed network and array antenna in the base station antenna feed system can receive signals. This ensures that a coverage area of an antenna signal remains unchanged but transmit power is reduced, effectively saves energy consumption, and ensures that a mobile device in a cell served by an array antenna corresponding to a turned-off power amplifier maintains normal communication.

The following describes the communication control method in this application by using an example in which the energy-saving network a1 is added to the feed network in the horizontal dimension.

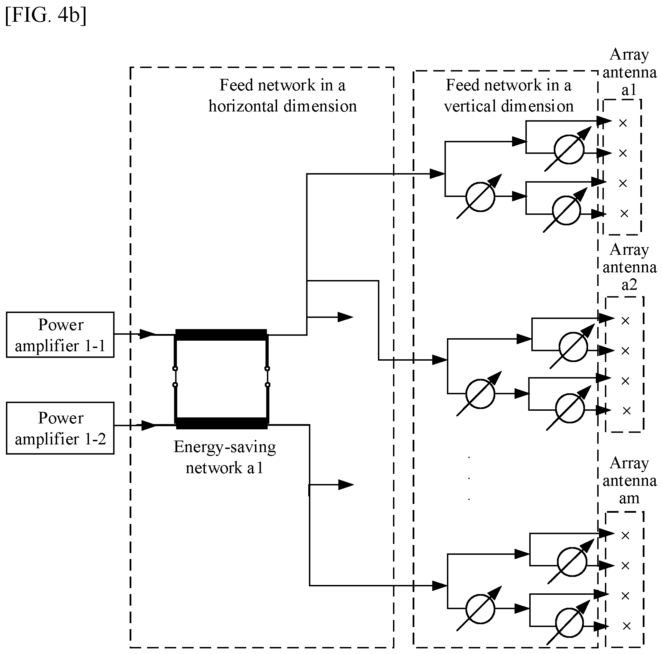

As shown in FIG. 4b, the power amplifier 1-1 and the power amplifier 1-2 are connected to input ends (a port 1 and a port 2) of the energy-saving network a1 through an input end of the feed network in the horizontal dimension, output ports (a port 3 and a port 4) of the energy-saving network a1 are connected to input ends of the feed network in the vertical dimension through output ends of the feed network in the horizontal dimension, and output ends of the feed network in the vertical dimension are connected to the array antenna a1, the array antenna a2, ..., and the array antenna am.

When the power amplifier 1-1 is turned off, the energy-saving network a1 obtains an output signal of a power amplifier (power amplifier 1-2) in a turned-on state, equally splits the output signal into two signal paths, and then sends the two signal paths to the feed network in the vertical dimension through the output ends of the energy-saving network a1 and the output ends of the feed network in the horizontal dimension. In this way, each feed network and array antenna in the base station antenna feed system can receive signals. This ensures that a coverage area of an antenna signal remains unchanged but transmit power is reduced, effectively saves energy consumption, and ensures that a mobile device in a cell served by an array antenna corresponding to a turned-off power amplifier maintains normal communication.

It may be understood that each feed network has a plurality of input ports and output ports. To be specific, each feed network in the horizontal dimension is connected to at least one feed network in the vertical dimension, and each feed network in the vertical dimension feeds at least one array antenna. The foregoing method describes a method for sending a signal to a part of array antennas, and a method for sending a signal to another array antenna is the same as the foregoing method. Details are not described herein again.

In some embodiments, a quantity of energy-saving networks disposed between the power amplifier and the feed network in the horizontal dimension and a quantity of energy-saving networks disposed between the feed network in the horizontal dimension and the feed network in the vertical dimension may be determined based on the antenna array of the base station antenna feed system. For example, if the antenna array has n×m array antennas (n rows and m columns) and p antenna sub-arrays in the vertical dimension (where p<n, p is set based on a maximum transmit power requirement of a base station, a value of p determines a total quantity of power amplifiers (for example, 4p), and a larger value of p indicates a larger total quantity of power amplifiers), 2p energy-saving networks may be disposed between the power amplifier and the feed network in the horizontal-dimension; and p×m energy-saving networks may be disposed between the feed network in the vertical dimension and the feed network in the horizontal dimension.

It may be understood that a feed network has a plurality of input ports and a plurality of output ports, and one feed network in a horizontal dimension may be connected to a plurality of feed networks in a vertical dimension, that is, one power amplifier corresponds to at least one feed network in the vertical dimension.

The following describes the communication control method in this application by using an example in which an energy-saving network b1 is added between the feed network in the horizontal dimension and the feed network in the vertical dimension.

It may be understood that, when the energy-saving network b1 is added between the feed network in the horizontal dimension and the feed network in the vertical dimension, one input end (port 1) of the energy-saving network b1 is connected to an output end of a feed network in a horizontal dimension of one power amplifier, the other input end (port 2) of the energy-saving network b1 is connected to an output end of a feed network in the horizontal dimension of the other power amplifier; and one output end (port 3) of the energy-saving network b1 is connected to an input end of a feed network in a vertical dimension of the one power amplifier, the other output end (port 4) of the energy-saving network b1 is connected to an input end of a feed network in the vertical dimension of the other power amplifier.

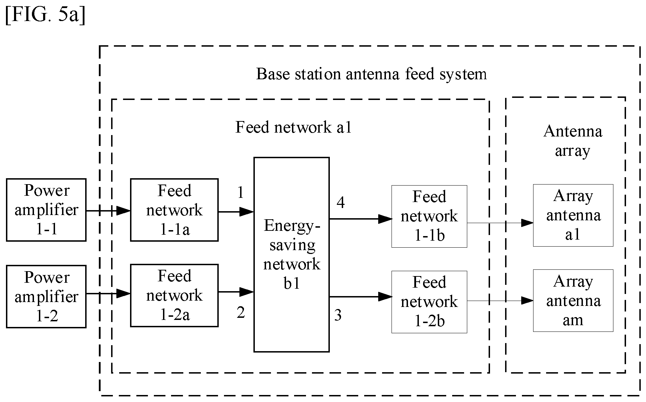

As shown in FIG. 5a, an output end of the power amplifier 1-1 is connected to the feed network 1-1a, the feed network 1-1a is connected to one input end (port 1) of the energy-saving network b1, an output end of the power amplifier 1-2 is connected to the feed network 1-2a, the feed network 1-2a is connected to the other input end (port 2) of the energy-saving network b1, one output end (port 3) of the energy-saving network b1 is connected to an input end of the feed network 1-2b, and the other output end (port 4) of the energy-saving network b1 is connected to an input end of the feed network 1-1b. An output end of the feed network 1-1b is connected to a port of the array antenna a1, and an output end of the feed network 1-2b is connected to a port of the array antenna am.

When the power amplifier 1-1 is turned off, the feed network 1-1a obtains an output signal of a power amplifier (power amplifier 1-2) in a turned-on state, and sends the output signal to the energy-saving network b1. The energy-saving network b1 equally splits the signal sent by the power amplifier 1-2 into two signal paths, sends the signal to the feed network 1-2b through the port 3 of the energy-saving network b1, and sends the signal to the feed network 1-1b through the port 4 of the energy-saving network b1. In this way, each feed network and array antenna in the base station antenna feed system can receive signals. This ensures that a mobile device in a cell served by an array antenna corresponding to a turned-off power amplifier maintains normal communication.

The following describes the communication control method in this application by using an example in which the energy-saving network b1, an energy-saving network b2, ..., and an energy-saving network bp are added to the feed network in the vertical dimension.

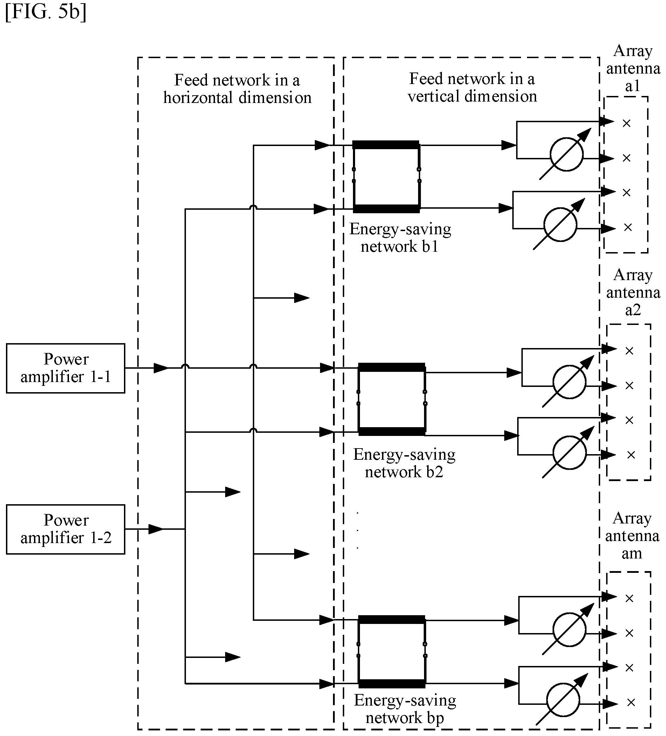

As shown in FIG. 5b, an output end of the power amplifier 1-1 and an output end of the power amplifier 1-2 are connected to input ends of the feed network in the horizontal dimension, and output ends of the feed network in the horizontal dimension are connected to input ends of the energy-saving network b1, the energy-saving network b2, ..., and the energy-saving network bp through input ends of the feed network in the vertical dimension, output ends of the energy-saving network b1, the energy-saving network b2, ..., and the energy-saving network bp are connected to the array antenna a1, the array antenna a2, ..., and the array antenna am through output ends of the feed network in the vertical dimension.

When the power amplifier 1-1 is turned off, the feed network in the horizontal dimension obtains an output signal of a power amplifier (power amplifier 1-2) in a turned-on state, and sends the output signal to the input ends of the energy-saving network b1, the energy-saving network b2, ..., and the energy-saving network bp. The energy-saving network b1, the energy-saving network b2, ..., and the energy-saving network bp split the signal sent by the power amplifier 1-2 into two signal paths, and sends the signal to each output end of the energy-saving network in the vertical dimension. In this way, each array antenna in the base station antenna feed system can receive signals. This ensures that a mobile device in a cell served by an array antenna corresponding to a turned-off power amplifier maintains normal communication.

It may be understood that each feed network has a plurality of input ports and output ports. To be specific, each feed network in the horizontal dimension is connected to at least one feed network in the vertical dimension, and each feed network in the vertical dimension feeds at least one array antenna. The foregoing method describes a method for sending a signal to a part of array antennas, and a method for sending a signal to another array antenna is the same as the foregoing method. Details are not described herein again.

The following describes the communication control method in this application by using an example in which the energy-saving network a1 is added between the power amplifier and the feed network in the horizontal dimension, and the energy-saving network b1 is added between the feed network in the horizontal dimension and the feed network in the vertical dimension.

In this application, one input end (port 1) of the energy-saving network a1 is connected to an output end of one power amplifier in a group of power amplifiers, and the other input end (port 2) of the energy-saving network a1 is connected to an output end of the other power amplifier; and one output end (port 3) of the energy-saving network a1 is connected to an input end of a feed network in a horizontal dimension of the one power amplifier, and the other output end (port 4) of the energy-saving network a1 is connected to an input end of a feed network in the horizontal dimension of the other power amplifier. One input end (port 1) of the energy-saving network b1 is connected to an output end of the feed network in the horizontal dimension of the one power amplifier, the other input end (port 2) of the energy-saving network b1 is connected to an output end of the feed network in the horizontal dimension of the other power amplifier; and one output end (port 3) of the energy-saving network b1 is connected to an input end of a feed network in a vertical dimension of the one power amplifier, the other output end (port 4) of the energy-saving network b1 is connected to an input end of a feed network in the vertical dimension of the other power amplifier.

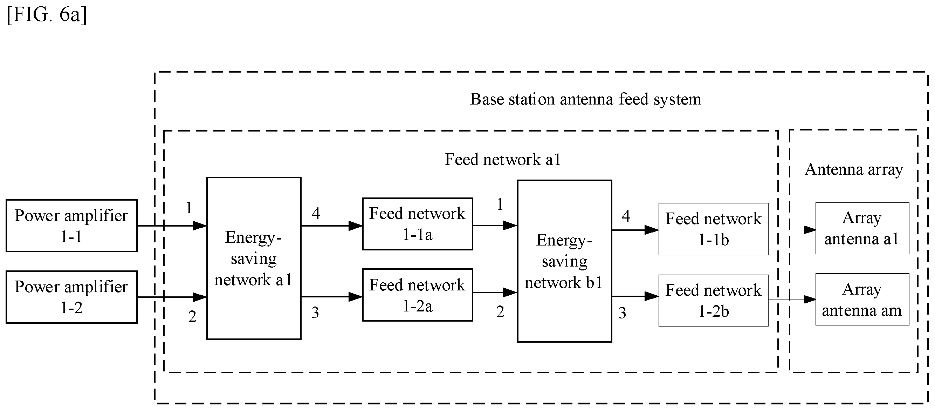

As shown in FIG. 6a, the power amplifier 1-1 is connected to one input end (port 1) of the energy-saving network a1, the power amplifier 1-2 is connected to the other input end (port 2) of the energy-saving network a1, one output end (port 3) of the energy-saving network a1 is connected to the feed network 1-2a, and the other output end (port 4) of the energy-saving network a1 is connected to the feed network 1-1a. An output end of the feed network 1-1a is connected to one input end (port 1) of the energy-saving network b1, an output end of the feed network 1-2a is connected to the other input end (port 2) of the energy-saving network b1, one output end (port 3) of the energy-saving network b1 is connected to an input end of the feed network 1-2b, and the other output end (port 4) of the energy-saving network b1 is connected to an input end of the feed network 1-1b. An output end of the feed network 1-1b is connected to a port of the array antenna a1, and an output end of the feed network 1-2b is connected to a port of the array antenna am.

When the power amplifier 1-1 is turned off, the energy-saving network a1 obtains an output signal of a power amplifier (power amplifier 1-2) in a turned-on state, equally splits the output signal into two signal paths, and then sends the two signal paths to the feed network 1-1a and the feed network 1-2a of the base station antenna feed system through the output ends of the energy-saving network a1. Then, the feed network 1-1a and the feed network 1-2a input the signals to the energy-saving network b1, and send the signals to the feed network 1-1b and the feed network 1-2b through the output ends of the energy-saving network b1. In this way, each array antenna in the base station antenna feed system can receive signals. This ensures that a coverage area of an antenna signal remains unchanged, and ensures that a mobile device in a cell served by an array antenna corresponding to a turned-off power amplifier maintains normal communication.

The following describes the communication control method in this application by using an example in which the energy-saving networks a1 and a2 are added to the feed network in the horizontal dimension, and the energy-saving network b1, the energy-saving network b2, ..., and the energy-saving network bp are added to the feed network in the vertical dimension.

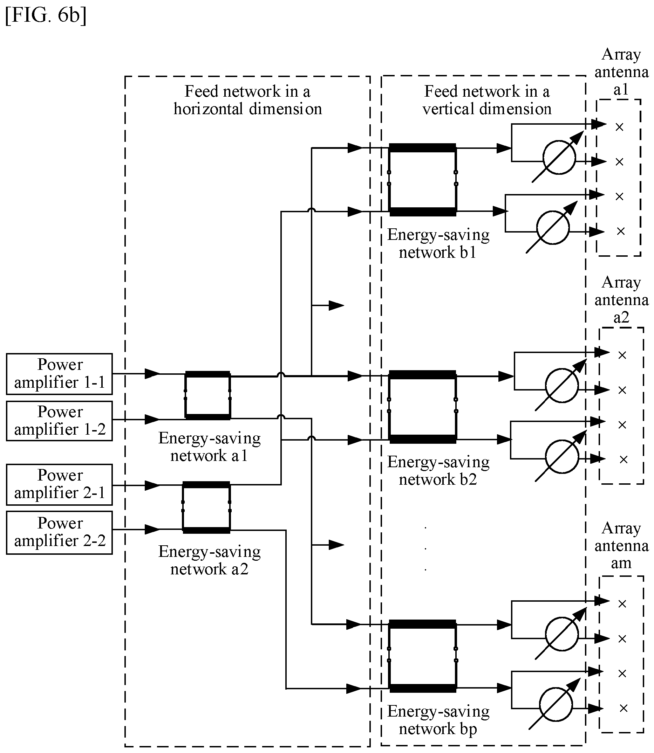

As shown in FIG. 6b, the power amplifier 1-1 and the power amplifier 1-2 are connected to input ends (a port 1 and a port 2) of the energy-saving network a1 through an input end of the feed network in the horizontal dimension, and a power amplifier 2-1 and a power amplifier 2-2 are connected to input ends (a port 1 and a port 2) of the energy-saving network a2 through an input end of the feed network in the horizontal dimension. Output ports (a port 3 and a port 4) of the energy-saving network a1 are connected to input ends of the energy-saving network b1, the energy-saving network b2, ..., and the energy-saving network bp through an output end of the feed network in the horizontal dimension and an input end of the feed network in the vertical dimension, and output ports (a port 3 and a port 4) of the energy-saving network a2 are connected to input ends of the energy-saving network b1, the energy-saving network b2, ..., and the energy-saving network bp. Output ends of the energy-saving network b1, the energy-saving network b2, ..., and the energy-saving network bp are connected to the array antenna a1, the array antenna a2, ..., and the array antenna am through output ends of the feed network in the vertical dimension.

When turned-off power amplifiers include the power amplifier 1-1 and the power amplifier 2-1, the energy-saving network a1 obtains an output signal of the power amplifier 1-2, equally splits the signal output by the power amplifier 1-2, and sends the signal to the input ends of the energy-saving network b1, the energy-saving network b2, ..., and the energy-saving network bp. The energy-saving network a2 obtains an output signal of the power amplifier 2-2, equally splits the signal output by the power amplifier 2-2, and sends the signal to the input ends of the energy-saving network b1, the energy-saving network b2, ..., and the energy-saving network bp. Output ends of the energy-saving network b1, the energy-saving network b2, ..., and the energy-saving network bp are connected to the array antenna a1, the array antenna a2, ..., and the array antenna am through output ends of the feed network in the vertical dimension. In this way, each array antenna in the base station antenna feed system can receive signals. This ensures that a coverage area of an antenna signal remains unchanged, and ensures that a mobile device in a cell served by an array antenna corresponding to a turned-off power amplifier maintains normal communication.

It may be understood that each feed network has a plurality of input ports and output ports. To be specific, each feed network in the horizontal dimension is connected to at least one feed network in the vertical dimension, and each feed network in the vertical dimension feeds at least one array antenna. The foregoing method describes a method for sending a signal to a part of array antennas, and a method for sending a signal to another array antenna is the same as the foregoing method. Details are not described herein again.

In some embodiments, when an energy-saving network is added between a power amplifier and a feed network in a horizontal dimension, and an energy-saving network is also added between the feed network in the horizontal dimension and a feed network in a vertical dimension, when the feed network in the horizontal dimension corresponds to a plurality of groups of power amplifiers, to ensure that p energy-saving networks between the feed network in the horizontal dimension and the feed network in the vertical dimension can receive a signal sent by the energy-saving network between the power amplifier and the feed network in the horizontal dimension, and signals of output ports of 2p energy-saving networks between the power amplifier and the feed network in the horizontal dimension may be equally split into (p/2) signal paths, that is, output signals of ports 3 of the energy-saving networks in the horizontal dimension are equally split into (p/2) signal paths, and output signals of ports 4 of the energy-saving networks in the horizontal dimension are equally split into (p/2) signal paths. Then, (p/2) signal paths corresponding to the ports 3 of the energy-saving networks in the horizontal dimension are respectively input to one input port of each of the p energy-saving networks between the feed network in the horizontal dimension and the feed network in the vertical dimension, and (p/2) signal paths corresponding to the ports 4 of the energy-saving networks in the horizontal dimension are respectively input to the other input port of each of the p energy-saving networks between the feed network in the horizontal dimension and the feed network in the vertical dimension.

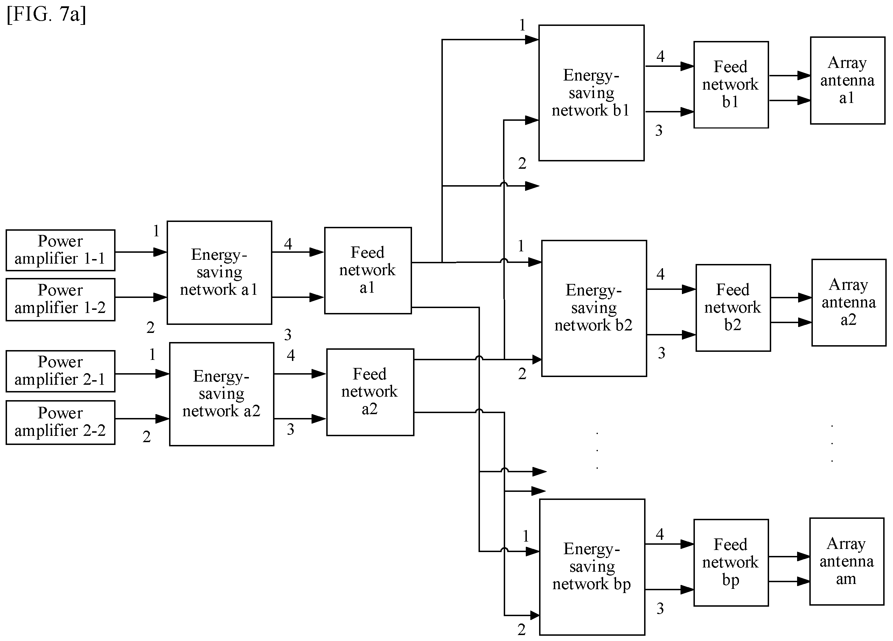

The following uses an example in which the energy-saving network a1 and the energy-saving network a2 are included between the power amplifier and the feed network in the horizontal dimension, and the energy-saving network b1, the energy-saving network b2, ..., and the energy-saving network bp are included between the feed network in the horizontal dimension and the feed network in the vertical dimension. With reference to FIG. 7a, a method for inputting a signal output by an energy-saving network between a power amplifier and a feed network in a horizontal dimension to an energy-saving network between the feed network in the horizontal dimension and a feed network in a vertical dimension is described.

As shown in FIG. 7a, the power amplifier 1-1 and the power amplifier 1-2 are connected to input ends of the energy-saving network a1, output ends of the energy-saving network a1 are connected to input ends of a feed network a1 (or referred to as a power-splitting and phase-shifting network), and output ends of the feed network a1 are connected to input ends of the energy-saving network b1, the energy-saving network b2, ..., and the energy-saving network bp. The power amplifier 2-1 and the power amplifier 2-2 are connected to input ends of the energy-saving network a2, output ends of the energy-saving network a2 are connected to input ends of a feed network a2, and output ends of the feed network a2 are connected to input ends of the energy-saving network b1, the energy-saving network b2, ..., and the energy-saving network bp. Output ends of the energy-saving network b1 are connected to input ends of a feed network b1, and output ends of the feed network b1 are connected to the array antenna a1. Output ends of the energy-saving network b2 are connected to input ends of a feed network b2, output ends of the feed network b2 are connected to the array antenna a2, ..., and output ends of the energy-saving network bp are connected to input ends of a feed network bp, and output ends of the feed network bp are connected to the array antenna am.

A signal of the power amplifier 1-1 is input to a port 1 of the energy-saving network a1, and may be output to the feed network a1 through a port 4 of the energy-saving network a1. The feed network a1 may split the signal into (p/2) signal paths, and input the signals to a port 1 of the energy-saving network b1, a port 1 of the energy-saving network b2, ..., and a port 1 of an energy-saving network b(p/2), respectively. A signal of the power amplifier 1-2 is input to a port 2 of the energy-saving network a1, and may be output to the feed network a1 through a port 3 of the energy-saving network a1. The feed network a1 may split the signal into (p/2) signal paths, and input the signals to a port 2 of an energy-saving network b(p/2+1), a port 2 of an energy-saving network b(p/2+2), ..., and a port 2 of the energy-saving network bp, respectively.

A signal of the power amplifier 2-1 is input to a port 1 of the energy-saving network a2, and may be output to the feed network a2 through a port 4 of the energy-saving network a2. The feed network a2 may split the signal into (p/2) signal paths, and input the signals to a port 1 of the energy-saving network b1, a port 1 of the energy-saving network b2, ..., and a port 1 of the energy-saving network b(p/2), respectively. A signal of the power amplifier 2-2 is input to a port 2 of the energy-saving network a2, and may be output to the feed network a2 through a port 3 of the energy-saving network a2. The feed network a2 may split the signal into (p/2) signal paths, and input the signals to a port 2 of the energy-saving network b(p/2+1), a port 2 of the energy-saving network b(p/2+2), ..., and a port 2 of the energy-saving network bp, respectively.

When turned-off power amplifiers include the power amplifier 1-1 and the power amplifier 2-1, the energy-saving network a1 obtains an output signal of the power amplifier 1-2, equally splits the signal output by the power amplifier 1-2, and sends the signal to the feed network a1. The feed network a1 may split one signal into (p/2) signal paths, and input the signals to the port 1 of the energy-saving network b1, the port 1 of the energy-saving network b2, ..., and the port 1 of the energy-saving network b(p/2), respectively. The feed network a1 may also split the other signal into (p/2) signal paths, and input the signals to the port 2 of the energy-saving network b(p/2+1), the port 2 of the energy-saving network b(p/2+2), ..., and the port 2 of the energy-saving network bp, respectively. The energy-saving network a2 obtains an output signal of the power amplifier 2-2, equally splits the signal output by the power amplifier 2-2, and sends the signal to the feed network a2. The feed network a2 may split one signal into (p/2) signal paths, and input the signals to the port 1 of the energy-saving network b1, the port 1 of the energy-saving network b2, ..., and the port 1 of the energy-saving network b(p/2), respectively. The feed network a2 may also split the other signal into (p/2) signal paths, and input the signals to the port 2 of the energy-saving network b(p/2+1), the port 2 of the energy-saving network b(p/2+2), ..., and the port 2 of the energy-saving network bp, respectively. Therefore, this ensures that both the energy-saving network in the horizontal dimension and the energy-saving network in the vertical dimension can obtain the signal, thereby ensuring that a coverage area of a base station signal remains unchanged.

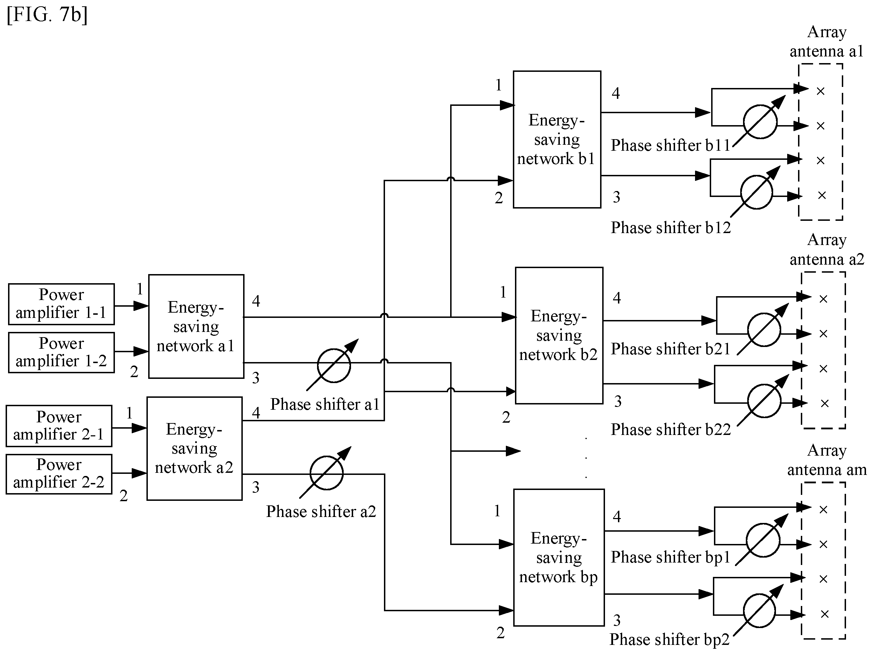

In some embodiments, as shown in FIG. 7b, the feed network a1 includes a phase shifter a1, the feed network a2 includes a phase shifter a2, the feed network b1 includes a phase shifter b11 and a phase shifter b12, the feed network b2 includes a phase shifter b21 and a phase shifter b22, ..., and the feed network bp includes a phase shifter bp1 and a phase shifter bp2.

It may be understood that each feed network has a plurality of input ports and output ports. To be specific, each feed network in the horizontal dimension is connected to at least one feed network in the vertical dimension, and each feed network in the vertical dimension feeds at least one array antenna. The foregoing method describes a method for sending a signal to a part of array antennas, and a method for sending a signal to another array antenna is the same as the foregoing method. Details are not described herein again.

In this application, after a power amplifier that needs to be turned off is determined based on a quantity of users, an output signal of the remaining power amplifier that is not turned off may be equally split and sent to a base station antenna feed system via an energy-saving network, so that all feed networks in the base station antenna feed system can obtain the signal, thereby ensuring that a coverage area of the base station is not reduced due to the turn-off of the power amplifier, and ensuring that all array antennas of an antenna array in the base station antenna feed system can receive the signal. In this way, based on the foregoing solution, a part of power amplifiers can be turned off based on the quantity of users, to save energy efficiency, and it can be ensured that a coverage area of an antenna signal remains unchanged, thereby ensuring normal communication of the users in an area corresponding to the turned-off power amplifier.

It may be understood that, in some embodiments, a power amplifier that needs to be turned off may be determined based on a quantity of users within a coverage area of a base station and a preset policy. For example, when the quantity of users falls within a first user interval, one quarter of power amplifiers are turned off; when the quantity of users falls within a second user interval, a half of power amplifiers are turned off; when the quantity of users falls within a third user interval, three quarters of power amplifiers are turned off; and when the quantity of users falls within a fourth user interval, no power amplifiers are turned off. A lower limit value of the fourth interval is greater than an upper limit value of the first interval, a lower limit value of the first interval is greater than an upper limit value of the second interval, and a lower limit value of the second interval is greater than an upper limit value of the third interval.

In addition, it may be understood that the foregoing energy-saving network has a 90° hybrid coupler structure. Therefore, when the energy-saving network reaches a balanced state, all output ports have equal output power, that is, a signal may be evenly distributed to an output port of the energy-saving network via the energy-saving network. A signal may be output to the base station antenna feed system through each output port of the energy-saving network, to ensure that an array antenna corresponding to the turned-off power amplifier can obtain the signal, thereby keeping a coverage area of an antenna signal unchanged while reducing energy consumption, and ensuring that a mobile device in a cell served by the array antenna corresponding to the turned-off power amplifier can normally communicate.

With reference to FIG. 4a and FIG. 4b, the following describes the communication control method in this application based on a power amplifier turning off policy by using an example in which the energy-saving network a1 is disposed between the power amplifier and the feed network in the horizontal dimension.

As shown in FIG. 4a and FIG. 4b, when a quantity of current users within a coverage area of a base station falls within a second user interval, a half of power amplifiers are turned off, for example, the power amplifier 1-1 connected to the energy-saving network a1 is turned off, and the energy-saving network a1 obtains an output signal of a power amplifier (power amplifier 1-2) in a turned-on state. The energy-saving network a1 equally splits one signal sent by the power amplifier 1-2 into two signal paths, and then sends the signals to the base station antenna feed system via the energy-saving network a1, so that a feed network in the horizontal dimension corresponding to the power amplifier 1-1 can obtain the signals, thereby enabling both the array antenna a1 and the array antenna am to obtain the signals.

As shown in FIG. 4b, when a quantity of current users within a coverage area of the base station falls within the second user interval, a half of power amplifiers are turned off, for example, the power amplifier 1-1 connected to the energy-saving network a1 is turned off, and the energy-saving network a1 obtains an output signal of a power amplifier (power amplifier 1-2) in a turned-on state. The energy-saving network a1 equally splits one signal sent by the power amplifier 1-2 into two signal paths, and then sends the signals to the feed network in the vertical dimension through output ports of the feed network in the horizontal dimension, so that all feed networks in the vertical dimension can obtain the signals, and the array antenna a1, the array antenna a2, ..., and the array antenna am can obtain the signals.

It may be understood that each feed network has a plurality of input ports and output ports. To be specific, each feed network in the horizontal dimension is connected to at least one feed network in the vertical dimension, and each feed network in the vertical dimension feeds at least one array antenna. The foregoing method describes a method for sending a signal to a part of array antennas, and a method for sending a signal to another array antenna is the same as the foregoing method. Details are not described herein again.

With reference to FIG. 5a and FIG. 5b, the following describes the communication control method in this application based on a power amplifier turning off policy by using an example in which the energy-saving network b1 is disposed between the feed network in the horizontal dimension and the feed network in the vertical dimension.

As shown in FIG. 5a, when a quantity of current users within a coverage area of the base station falls within the second user interval, a half of power amplifiers are turned off, for example, the power amplifier 1-2 is turned off. The feed network in the horizontal dimension obtains an output signal of a power amplifier (power amplifier 1-1) in a turned-on state, and sends the output signal to the energy-saving network b1. The energy-saving network b1 equally splits the signal sent by the power amplifier 1-1 into two signal paths, sends the signals to the feed network 1-2b through the port 3 of the energy-saving network b1, and sends the signals to the feed network 1-1b through the port 4 of the energy-saving network b1. In this way, the feed network 1-2b corresponding to the power amplifier 1-2 may also obtain the signal, so that both the array antenna a1 and the array antenna am may obtain the signals. This ensures that a coverage area of an antenna signal remains unchanged, and ensures that a mobile device in a cell served by an array antenna corresponding to a turned-off power amplifier maintains normal communication.

As shown in FIG. 5b, when a quantity of current users within a coverage area of the base station falls within the second user interval, a half of power amplifiers are turned off, for example, the power amplifier 1-2 is turned off. The feed network in the horizontal dimension obtains an output signal of a power amplifier (power amplifier 1-1) in a turned-on state, and sends the output signal to the energy-saving network b1, the energy-saving network b2, ..., and the energy-saving network bp. The energy-saving network b1, the energy-saving network b2, ..., and the energy-saving network bp equally split the signal sent by the power amplifier 1-1 into two signal paths, and then send the signals to output ports of the feed network in the vertical dimension through output ends of the energy-saving network b1, the energy-saving network b2, ..., and the energy-saving network bp. In this way, the array antenna a1, the array antenna a2, ..., and the array antenna am can all obtain the signals. This ensures that a coverage area of an antenna signal remains unchanged, and ensures that a mobile device in a cell served by an array antenna corresponding to a turned-off power amplifier maintains normal communication.

It may be understood that each feed network has a plurality of input ports and output ports. To be specific, each feed network in the horizontal dimension is connected to at least one feed network in the vertical dimension, and each feed network in the vertical dimension feeds at least one array antenna. The foregoing method describes a method for sending a signal to a part of array antennas, and a method for sending a signal to another array antenna is the same as the foregoing method. Details are not described herein again.

With reference to FIG. 6a and FIG. 6b, the following describes the communication control method in this application based on a power amplifier turning off policy by using an example in which the energy-saving network a1 is disposed between the power amplifier and the feed network in the horizontal dimension, and the energy-saving network b1 is disposed between the feed network in the horizontal dimension and the feed network in the vertical dimension.

As shown in FIG. 6a, when a quantity of current users within a coverage area of the base station falls within the second user interval, a half of power amplifiers are turned off, for example, the power amplifier 1-1 is turned off. The energy-saving network a1 obtains an output signal of a power amplifier (power amplifier 1-2) in a turned-on state. The energy-saving network a1 equally splits one signal sent by the power amplifier 1-2 into two signal paths, and then sends the signals to the feed network 1-1a and the feed network 1-2a through the energy-saving network a1. In this way, the array antenna a1 corresponding to the power amplifier 1-1 may also obtain the signals. This ensures that a coverage area of an antenna signal remains unchanged, and ensures that a mobile device in a cell served by an array antenna corresponding to a turned-off power amplifier maintains normal communication.

It may be understood that each feed network has a plurality of input ports and output ports. To be specific, each feed network in the horizontal dimension is connected to at least one feed network in the vertical dimension, and each feed network in the vertical dimension feeds at least one array antenna. The foregoing method describes a method for sending a signal to a part of array antennas, and a method for sending a signal to another array antenna is the same as the foregoing method. Details are not described herein again.

With reference to FIG. 7b, the following describes the communication control method in this application based on a power amplifier turning off policy by using an example in which the energy-saving network a1 and the energy-saving network a2 are disposed between the power amplifier and the feed network in the horizontal dimension, and the energy-saving network b1, the energy-saving network b2, ..., and the energy-saving network bp are disposed between the feed network in the horizontal dimension and the feed network in the vertical dimension.

As shown in FIG. 7b, when a quantity of current users within a coverage area of the base station falls within the second user interval, a half of power amplifiers are turned off, for example, the power amplifier 1-1 and the power amplifier 2-1 are turned off. The energy-saving network a1 obtains an output signal of the power amplifier 1-2, equally splits the signal output by the power amplifier 1-2 into two signal paths, and sends the signals to the feed network a1. One signal is sent to the phase shifter a1 of the feed network a1, for the phase shifter a1 to perform phase shifting processing on the signal. The feed network a1 may split one signal into (p/2) signal paths, and input the signals to the port 1 of the energy-saving network b1, the port 1 of the energy-saving network b2, ..., and the port 1 of the energy-saving network b(p/2), respectively. The feed network a1 may also split the other signal into (p/2) signal paths, and input the signals to the port 2 of the energy-saving network b(p/2+1), the port 2 of the energy-saving network b(p/2+2), ..., and the port 2 of the energy-saving network bp, respectively. The energy-saving network a2 obtains an output signal of the power amplifier 2-2, equally splits the signal output by the power amplifier 2-2 into two signal paths, and sends one signal to the feed network a2. The signal is sent to the phase shifter a2 of the feed network a2, for the phase shifter a2 to perform phase shifting processing on the signal. The feed network a2 may split one signal into (p/2) signal paths, and input the signals to the port 1 of the energy-saving network b1, the port 1 of the energy-saving network b2, ..., and the port 1 of the energy-saving network b(p/2), respectively. The feed network a2 may also split the other signal into (p/2) signal paths, and input the signals to the port 2 of the energy-saving network b(p/2+1), the port 2 of the energy-saving network b(p/2+2), ..., and the port 2 of the energy-saving network bp, respectively. Therefore, this ensures that each array antenna can obtain the signal, and ensures that a coverage area of a base station signal remains unchanged.

It may be understood that each feed network has a plurality of input ports and output ports. To be specific, each feed network in the horizontal dimension is connected to at least one feed network in the vertical dimension, and each feed network in the vertical dimension feeds at least one array antenna. The foregoing method describes a method for sending a signal to a part of array antennas, and a method for sending a signal to another array antenna is the same as the foregoing method. Details are not described herein again.

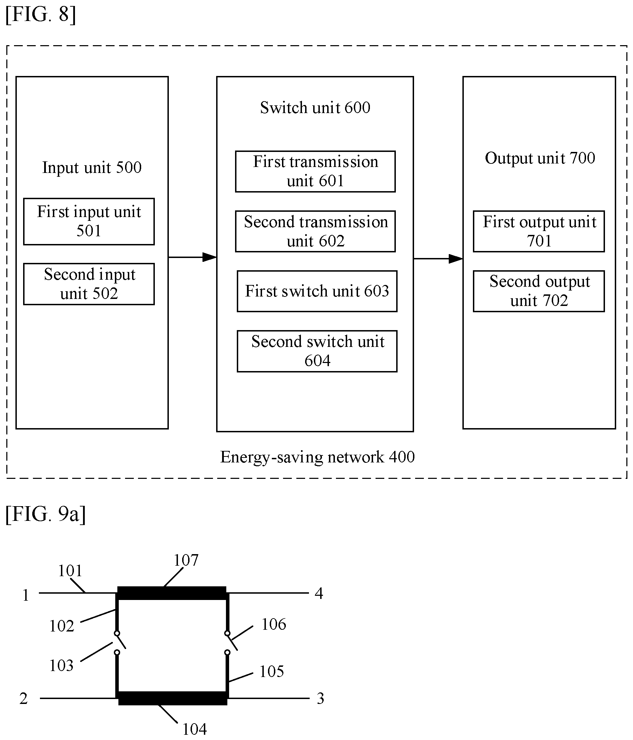

The following describes units of an energy-saving network provided in this application with reference to FIG. 8. As shown in FIG. 8, the energy-saving network 400 includes an input unit 500, a switch unit 600, and an output unit 700.

The input unit 500 includes a first input unit 501 and a second input unit 502. One end of the input unit 500 is connected to a power amplifier unit or a feed network in a horizontal dimension, and the other end is connected to the switch unit 600. The first input unit 501 and the second input unit 502 are configured to obtain a signal, and output the signal to the switch unit 600.

The switch unit 600 includes a first transmission unit 601, a second transmission unit 602, a first switch unit 603, and a second switch unit 604. One end of the switch unit 600 is connected to the input unit 500, and the other end is connected to the output unit 700. The switch unit 600 is configured to transmit an output signal of the first input unit 501 and/or the second input unit 502 to the output unit 700.

The output unit 700 includes a first output unit 701 and a second output unit 702. The output unit 700 is configured to obtain a signal sent by the switch unit 600, and send the obtained signal to a feed network in the horizontal dimension or a feed network in a vertical dimension.

In embodiments of this application, when all subunits in the input unit 500 obtain a signal, the subunits in the input unit 500 send the signal to the output unit 700 through paths corresponding to the respective subunits.

For example, when both the first input unit 501 and the second input unit 502 obtain a signal, the first input unit 501 sends the obtained signal to the first output unit 701 through a first path, and the second input unit 502 sends the obtained signal to the second output unit 702 through a second path. The first path includes the first transmission unit 601, and the second path includes the second transmission unit 602.

When at least one subunit in the input unit 500 does not obtain a signal, a subunit that obtains the signal in the input unit 500 sends the obtained signal to the switch unit 600, and the obtained signal is equally split via the subunits in the switch unit 600, and is sent to the subunits in the output unit 700.

For example, when at least one of the first input unit 501 and the second input unit 502 in the input unit 500 does not obtain a signal, for example, when the second input unit 502 does not obtain a signal, the first input unit 501 sends the obtained signal to the switch unit 600, and the signals obtained by the first input unit 501 is equally split via the first transmission unit 601, the second transmission unit 602, the first switch unit 603, and the second switch unit 604 in the switch unit 600, and is then sent to the subunits in the output unit 700 through a first path, a second path, a third path, and a fourth path. The first path includes the first transmission unit 601, the second path includes the second transmission unit 602, the third path includes the first switch unit 603, and the fourth path includes the second switch unit 604.

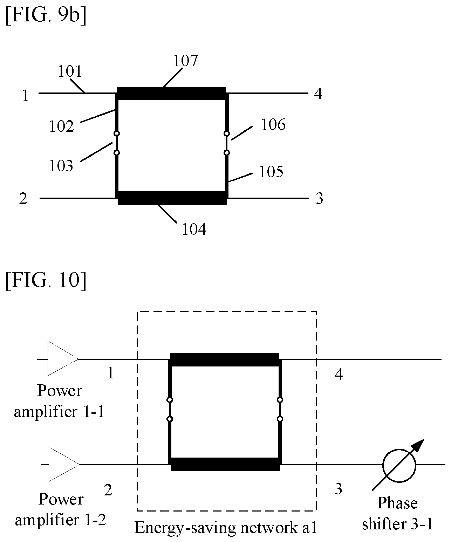

The following describes, based on FIG. 8, a structure of an energy-saving network provided in this application with reference to FIG. 9a and FIG. 9b. FIG. 9a is a diagram of an energy-saving network when the first path and the second path are enabled, and FIG. 9b is a diagram of an energy-saving network when the first path, the second path, the third path, and the fourth path are enabled.

As shown in FIG. 9a and FIG. 9b, an energy-saving network (or referred to as an adjustable power distribution network) includes a feeder 101, an input port (input unit 500) of the energy-saving network includes a port 1 (first input unit 501) and a port 2 (second input unit 502), an output port (output unit 700) includes a port 3 (first output unit 701) and a port 4 (second output unit 702), and the switch unit 600 includes a bridge arm 102 (part of the first switch unit 603), a single-pole single-throw switch 103 (part of the first switch unit 603), a bridge arm 104 (second transmission unit 602), a bridge arm 105 (part of the second switch unit 604), a single-pole single-throw switch 106 (part of the second switch unit 604), and a bridge arm 107 (first transmission unit 601). The port 1 and the port 2 are isolated from each other, and a signal may be input to either of the port 1 and the port 2; and the port 3 and the port 4 are isolated from each other, and a signal may be output from either of the port 3 and the port 4. When the single-pole single-throw switch 103 and the single-pole single-throw switch 106 in the energy-saving network are turned on (closed) (as shown in FIG. 9b), the bridge arm 102, the single-pole single-throw switch 103, the bridge arm 104, the bridge arm 105, the single-pole single-throw switch 106, and the bridge arm 107 in the energy-saving network form a 90° hybrid coupler.

In embodiments of this application, when the energy-saving network is shown in FIG. 9a, the single-pole single-throw switch 103 and the single-pole single-throw switch 106 are turned off, and the energy-saving network includes two independent transmission paths: a first path and a second path. The port 1 and the port 2 are input ends, and the port 3 and the port 4 are output ends. In other words, the first path is input from the port 1, passes through the bridge arm 107, and is output to the port 4. The second path is input from the port 2, passes through the bridge arm 104, and is output by the port 3. Output power of power amplifiers obtained through the two paths is input to the energy-saving network, and then is output to the base station antenna feed system through the port 3 and the port 4, respectively.

It may be understood that, each output port of the energy-saving network may output power to an antenna array of the base station antenna feed system, and therefore, an original beam sweeping range of the antenna array of the base station antenna feed system is not changed.

As shown in FIG. 9b, in the energy-saving network, when the single-pole single-throw switch 103 and the single-pole single-throw switch 106 are turned on, no matter whether the power amplifier connected to the port 1 or the power amplifier connected to the port 2 is turned on, input power may be equally split via the energy-saving network through the first path, the second path, the third path to the port 3 and the port 4, and the fourth path, and then output from the port 3 and the port 4 to the base station antenna feed system. The third path includes a path a and a path b, and the fourth path includes a path c and a path d. The path a is input from the port 1, passes through the bridge arm 102 and the single-pole single-throw switch 103, and is output to the port 2; the path b is input from the port 2, passes through the single-pole single-throw switch 103 and the bridge arm 102, and is output to the port 1; the path c is input from the port 3, passes through the bridge arm 105 and the single-pole single-throw switch 106, and is output to the port 4; and the path d is input from the port 4, passes through the single-pole single-throw switch 106 and the bridge arm 105, and is output to the port 3.

For example, when all power amplifiers connected to the port 2 of the energy-saving network are turned off, and all power amplifiers connected to the port 1 of the energy-saving network are turned on, the single-pole single-throw switch 103 and the single-pole single-throw switch 106 are both turned on, and output power of the power amplifiers connected to the port 1 is transmitted to the port 3 and the port 4 through the network shown in the figure. Voltage amplitudes of the port 3 and the port 4 are equal, and a phase difference is 90 degrees.

It may be understood that, when the energy-saving network obtains two signal paths, even if the energy-saving network is connected to the feed network, it is difficult to perform beamforming on the transmitted signals via the feed network. Therefore, in this application, to enable the energy-saving network to perform beamforming on the transmitted signals via the feed network when obtaining the two signal paths, the single-pole single-throw switch 103 is connected between the port 1 and the port 2 of the energy-saving network, and the single-pole single-throw switch 106 is connected between the port 3 and the port 4 of the energy-saving network. In this way, when the energy-saving network obtains two signal paths, turning off the single-pole single-throw switch 103 and the single-pole single-throw switch 106 causes the energy-saving network to be in a non-energy-saving state as shown in FIG. 9a; and when the energy-saving network obtains a signal, turning on the single-pole single-throw switch 103 and the single-pole single-throw switch 106 causes the energy-saving network to be in an energy-saving state as shown in FIG. 9b.

In this application, the energy-saving network is configured as follows: When the energy-saving network is in a one-input-two-output state or a two-input-two-output state, the energy-saving network is in a matching state. When the energy-saving network is in the matching state, it can be ensured that the energy-saving network operates normally, that is, all input signals can be output from an output port of the energy-saving network.

It may be understood that, when the single-pole single-throw switch 103 and the single-pole single-throw switch 106 in the energy-saving network are turned on (closed), the energy-saving network is a 90° hybrid coupler. When a voltage of the port 4 is equal to a voltage of the port 3, the energy-saving network reaches a balanced state, and all output ports of the energy-saving network have equal output power, that is, the 90° hybrid coupler may equally split power of an input signal into two signals of equal power, that is, output power of a power amplifier in a turned-on state may be evenly distributed to all output ports of the energy-saving network through the energy-saving network. Output power is output to the antenna array of the base station antenna feed system through each output port of the energy-saving network, so that a part of power amplifiers are turned off based on a quantity of users, to reduce output power (transmit power) of the antenna, thereby saving energy efficiency, ensuring that a coverage area of an antenna signal remains unchanged, and ensuring normal communication of a user.

To be specific, in embodiments of this application, the output ports (the port 3 and the port 4) of the energy-saving network are connected to the input ports of the feed network. Output power of one or two power amplifiers obtained through the input ports (the port 1 and/or the port 2) of the energy-saving network may be evenly distributed to the feed network of the base station antenna feed system through the output ports of the energy-saving network, and then transmitted to the antenna array through the feed network, so that the antenna array in the base station antenna feed system always operates as a full array regardless of whether the energy-saving network is in an energy-saving state or a non-energy-saving state. This ensures that an original beam sweeping range of the antenna array remains unchanged.

In this application, the single-pole single-throw switch 103 and the single-pole single-throw switch 106 may be any one of a metal-oxide-semiconductor field-effect transistor (metal-oxide-semiconductor field-effect transistor, MOSFET), a diode, a micro-electro-mechanical system (micro-electro-mechanical system, MEMS), or a reed switch (or referred to as a magnetic reed switch).

In embodiments of this application, the energy-saving network uses only two single-pole single-throw switches and transmission lines with different impedances, providing advantages of a simple structure, low costs, ease of implementation, and significant energy-saving effects.

In embodiments of this application, when the single-pole single-throw switch 103 and the single-pole single-throw switch 106 are turned off, the energy-saving network is in a non-energy-saving state as shown in FIG. 9a; or when the single-pole single-throw switch 103 and the single-pole single-throw switch 106 are turned on, the energy-saving network is in an energy-saving state as shown in FIG. 9b. With reference to FIG. 9a and FIG. 9b, the following describes a method for controlling the single-pole single-throw switch 103 and the single-pole single-throw switch 106 in the energy-saving network to be turned on and turned off.

In some embodiments, the communication device has a control module. The control module may obtain an electrical signal sent by a power amplifier. When it is determined, based on the electrical signal, that only one power amplifier is turned on, a turn-on signal is sent to the single-pole single-throw switch 103 and the single-pole single-throw switch 106 to control the single-pole single-throw switch 103 and the single-pole single-throw switch 106 to be in a turned-on state; and when it is determined that both power amplifiers are turned on, a turn-off signal may be sent to the single-pole single-throw switch 103 and the single-pole single-throw switch 106 to control the single-pole single-throw switch 103 and the single-pole single-throw switch 106 to be in a turned-off state.

In some embodiments, when only one power amplifier is turned on, it may be determined that a voltage across two ends of the single-pole single-throw switch 103 is greater than a turn-on voltage of the single-pole single-throw switch 103, and the single-pole single-throw switch 103 is controlled to be in a turned-on state; and it may be determined that a voltage across two ends of the single-pole single-throw switch 106 is greater than a turn-on voltage of the single-pole single-throw switch 106, and the single-pole single-throw switch 106 is controlled to be in a turned-on state, so that the energy-saving network is in the energy-saving state as shown in FIG. 9b. When it is determined that two power amplifiers are both turned on, it is determined that a voltage across the two ends of the single-pole single-throw switch 103 is less than or equal to a turn-on voltage of the single-pole single-throw switch 103, and the single-pole single-throw switch 103 is controlled to be in a turned-off state; and it is determined that a voltage across the two ends of the single-pole single-throw switch 106 is less than or equal to a turn-on voltage of the single-pole single-throw switch 106, and the single-pole single-throw switch 106 is controlled to be in a turned-off state, so that the energy-saving network is in the non-saving state as shown in FIG. 9a.

It may be understood that, when the single-pole single-throw switch 103 and the single-pole single-throw switch 106 in the energy-saving network are turned on (closed), the energy-saving network is a 90° hybrid coupler, and output signals of the port 3 and the port 4 have equal amplitudes, but have a 90-degree phase difference. In embodiments of this application, a phase shifter may be connected to an output port (the port 3 or the port 4), so that output power of power amplifiers in different energy-saving states is evenly distributed to all array antennas via the phase shifter without changing a beam coverage area.

In embodiments of this application, a 2-bit phase shifter whose phase shift amount is 90° may be connected to any output port of the energy-saving network, to implement a 90° phase shift. The 2-bit phase shifter has four phase-shift states: 0°, 90°, 180°, and 270°, so that an output signal can maintain four states.

In some embodiments, the 2-bit phase shifter may perform a 90° phase shift on a signal by cascading two single-bit phase shifters. For example, the signal is phase-shifted by 45° via a first single-bit phase shifter, and then phase-shifted by 45° via a second single-bit phase shifter, to implement a 90° phase shift.

With reference to FIG. 10, a method for processing, by a 2-bit phase shifter, an output signal having a 90° phase difference is described below, using a 2-bit phase shifter 3-1 connected to the port 3 as an example.

As shown in FIG. 10, the port 3 of the energy-saving network a1 is connected to the phase shifter 3-1. When a voltage difference obtained by the port 1 and the port 2 is greater than a voltage threshold, the single-pole single-throw switch 103 and the single-pole single-throw switch 106 are turned on, so that the energy-saving network is in the energy-saving state. If only the port 1 obtains an output signal of the power amplifier 1-1, because the energy-saving network is a 90° hybrid coupler in this case, the port 3 and the port 4 have equal output power, but output signals having a 90-degree phase difference. After processing of the 2-bit phase shifter 3-1 connected to the port 3, phase differences are in four states: 90°, 180°, 270°, and 0°. The four states may correspond to four different beam directions of the antenna array.

When the energy-saving network is in the non-energy-saving state, if the signals obtained by the port 1 and the port 2 are equal-amplitude in-phase signals, after the signals pass through the 2-bit phase shifter 3 connected to the port 3, phase differences are in four states: 0°, 90°, 180°, and 270°, corresponding to four different beam directions, and the four directions are consistent with the energy-saving state.

In addition, in the non-energy-saving state, a digital phase shift may be controlled via a baseband unit, so that a phase difference between signals output by the power amplifier 1 and the power amplifier 2 may change arbitrarily, and the four beam directions may be adjusted in a small range.

In some embodiments, the array antenna a1, the array antenna a2, the array antenna a3, and the array antenna a4 may be used as a row array (or referred to as an array antenna 1) in the antenna array of the base station antenna feed system. If the antenna array of the base station antenna feed system includes n rows of array antennas, n groups of array antennas 1 are required, that is, n groups of circuit structures shown in any one of the diagrams in FIG. 4a to FIG. 7b are required.

In embodiments of this application, to ensure that an original beam sweeping range of the antenna array remains unchanged, a phase shifter may be further added to the feed network of the base station antenna feed system, to adjust a phase of each antenna in each antenna array via the phase shifter, to control a beam direction and ensure that a beam of the antenna can cover a specific angle range.

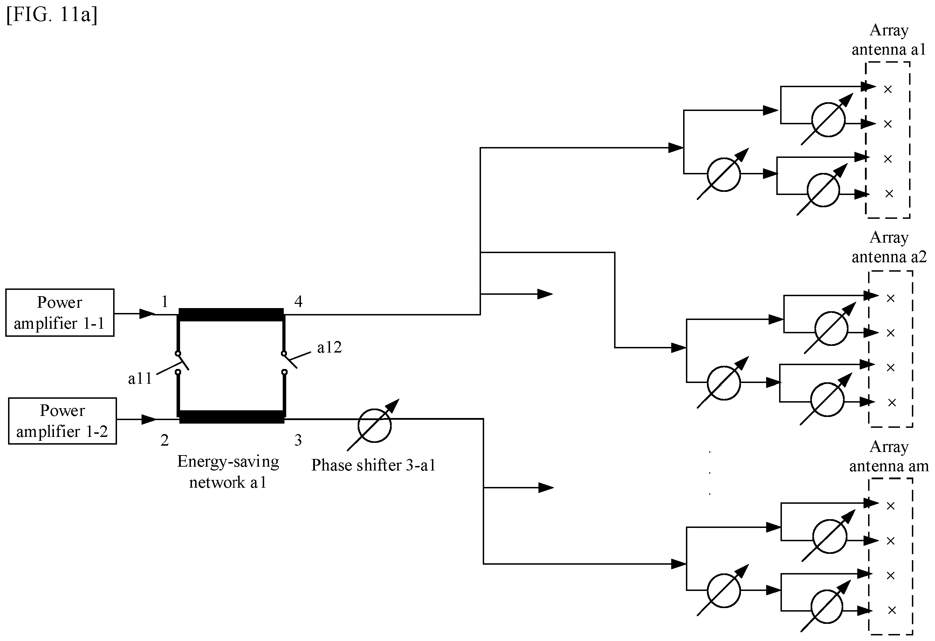

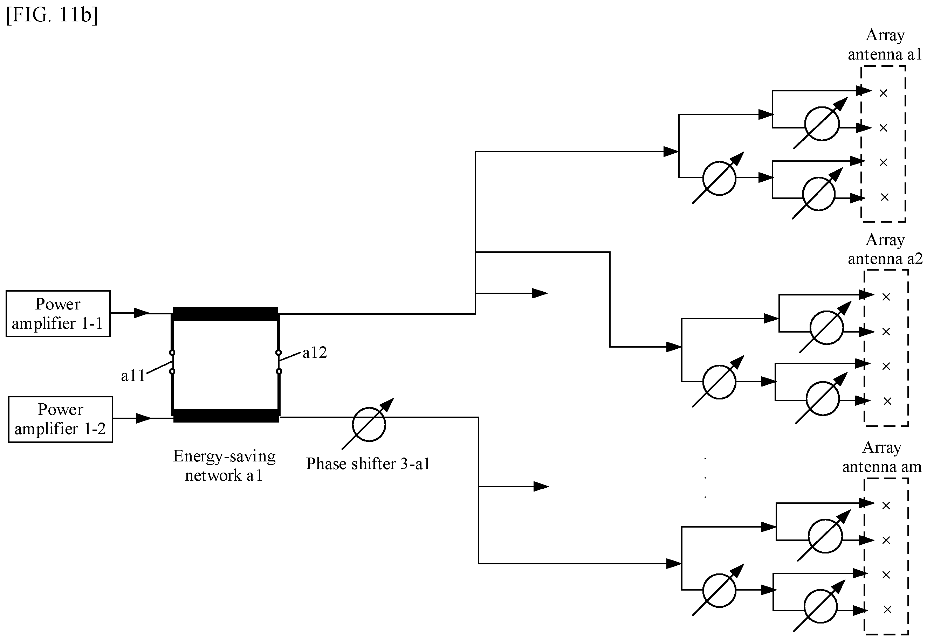

Generally, when an energy-saving network is connected to a power amplifier and a base station antenna feed system, the energy-saving network is in a non-energy-saving state by default. The following describes, with reference to FIG. 11a and FIG. 11b by using an example in which the energy-saving network is disposed between the power amplifier and the feed network in the horizontal dimension, a method for controlling, based on an output voltage of the power amplifier connected to the energy-saving network, the energy-saving network to switch between an energy-saving state and a non-energy-saving state, to ensure that a beam sweeping range of the antenna array remains unchanged. A difference between FIG. 11a and FIG. 4b lies in that the port 3 of the energy-saving network a1 is connected to a phase shifter 3-a1, and the energy-saving network in FIG. 11a is in a non-energy-saving state, while the energy-saving network in FIG. 4b is in an energy-saving state.

When a quantity of current users within a coverage area of the base station falls within the fourth user interval, both the power amplifier 1-1 and the power amplifier 1-2 are turned on, and a turn-off signal is sent to a single-pole single-throw switch a11 and a single-pole single-throw switch a12, to control the single-pole single-throw switch a11 and the single-pole single-throw switch a12 of the energy-saving network a1 to be turned off, that is, to keep the energy-saving network a1 in the non-saving state shown in FIG. 11a. The port 1 of the energy-saving network a1 obtains a signal of the power amplifier 1-1, and sends the signal to the port 4, so that each array antenna corresponding to the power amplifier 1-1 can obtain the signal. The port 2 of the energy-saving network a1 obtains a signal of the power amplifier 1-2, and sends the signal to the port 3. The phase shifter 3-a1 adjusts a phase of the output signal output by the port 3 (as shown in the embodiment shown in FIG. 10, and details are not described herein again), so that each array antenna corresponding to the power amplifier 1-2 can obtain the signal.

When a quantity of current users within a coverage area of the base station falls within a second user interval, a half of power amplifiers are turned off, for example, the power amplifier 1-1 connected to the energy-saving network a1 is turned off, and a turn-on signal is sent to the single-pole single-throw switch a11 and the single-pole single-throw switch a12, to control the single-pole single-throw switch a11 and the single-pole single-throw switch a12 of the energy-saving network a1 to be turned on, that is, to keep the energy-saving network a1 to switch to the energy-saving state shown in FIG. 11b.

The energy-saving network a1 obtains an output signal of a power amplifier (power amplifier 1-2) in a turned-on state. The energy-saving network a1 equally splits one signal sent by the power amplifier 1-2 into two signal paths, and then sends the signals to the base station antenna feed system through the port 3 and the port 4 of the energy-saving network a1, so that array antennas corresponding to the power amplifier 1-1 and the power amplifier 1-2 can obtain the signals. For details about how to send the signals to the array antennas through port 3 and port 4 of the energy-saving network a1, refer to the foregoing embodiments. Details are not described herein again.

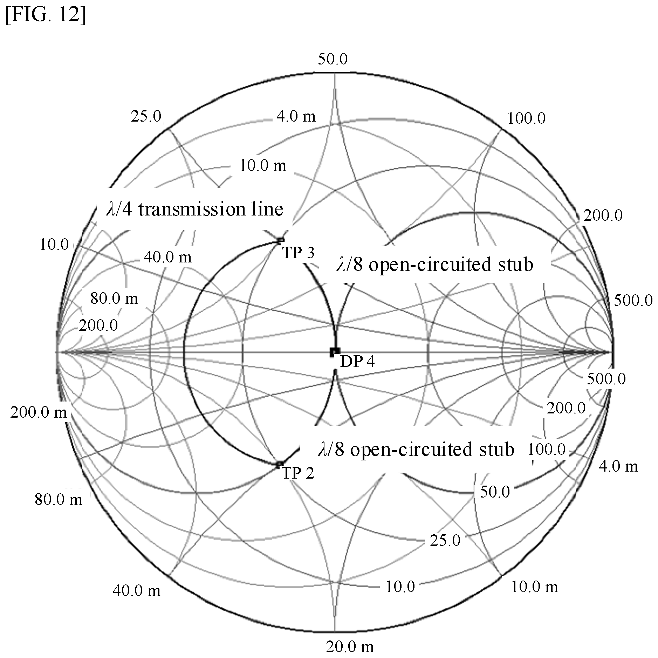

In embodiments of this application, resistance values of the bridge arm 104 and the bridge arm 107 are the same, resistance values of the bridge arm 102 and the bridge arm 105 are the same, and a ratio of the resistance value of the bridge arm 104 (or the bridge arm 107) to the resistance value of the bridge arm 102 (the bridge arm 105) meets 1:. In embodiments of this application, lengths of the bridge arm 104 and the bridge arm 107 are both quarter-wavelength transmission lines of 35.35 Ω as shown in FIG. 12, and lengths of the bridge arm 102 and the bridge arm 105 are both eighth-wavelength transmission lines of 50 Ω as shown in FIG. 12.

It may be understood that each feed network has a plurality of input ports and output ports. To be specific, each feed network in the horizontal dimension is connected to at least one feed network in the vertical dimension, and each feed network in the vertical dimension feeds at least one array antenna. The foregoing method describes a method for sending a signal to a part of array antennas, and a method for sending a signal to another array antenna is the same as the foregoing method. Details are not described herein again.

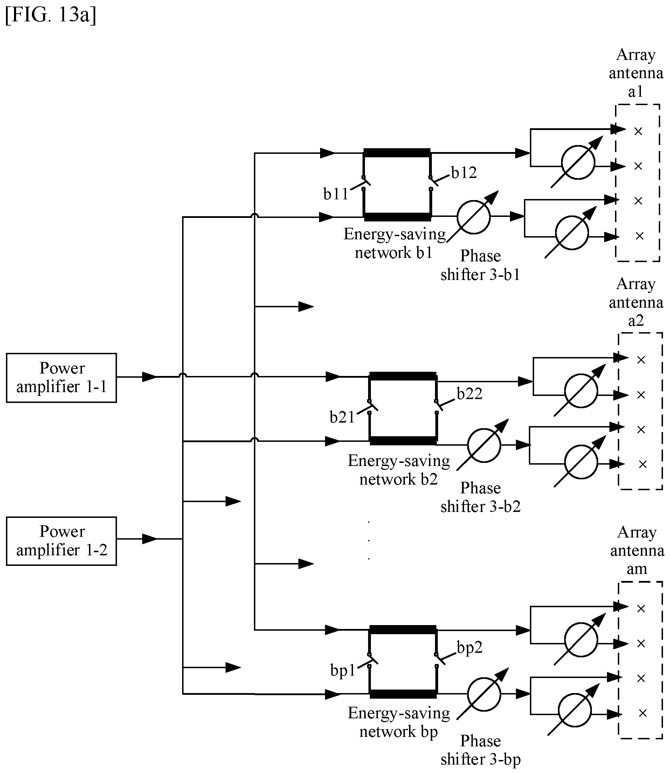

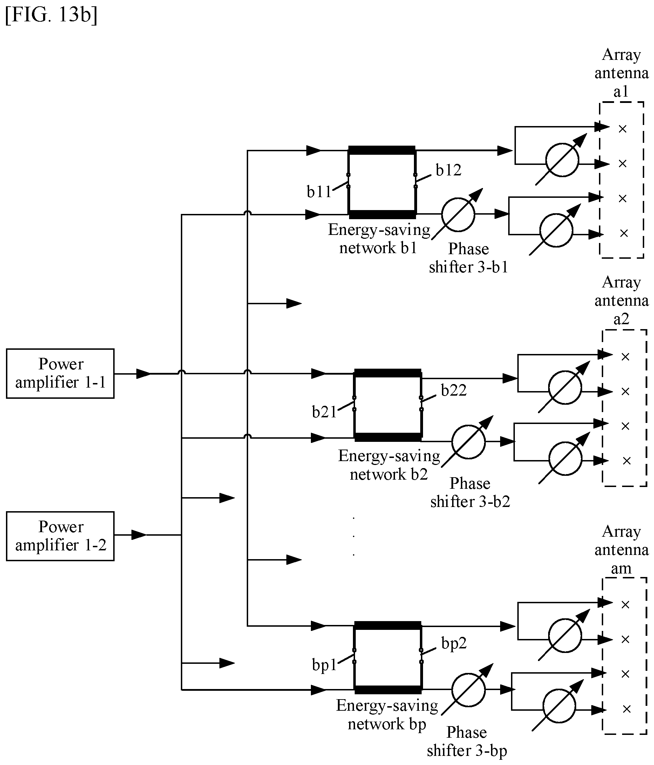

The following describes, with reference to FIG. 13a and FIG. 13b by using an example in which the energy-saving network is disposed between the feed network in the horizontal dimension and the feed network in the vertical dimension, a method for controlling, based on an output voltage of the power amplifier connected to the energy-saving network, the energy-saving network to switch between an energy-saving state and a non-energy-saving state, to ensure that a beam sweeping range of the antenna array remains unchanged. A difference between FIG. 13a and FIG. 5b lies in that the port 3 of the energy-saving network b1 is connected to a phase shifter 3-b1, and the energy-saving network in FIG. 13a is in a non-energy-saving state, while the energy-saving network in FIG. 5b is in an energy-saving state.

When a quantity of current users within a coverage area of the base station falls within the fourth user interval, both the power amplifier 1-1 and the power amplifier 1-2 are turned on, and a turn-off signal is sent to a single-pole single-throw switch b11 and a single-pole single-throw switch b12, to control the single-pole single-throw switch b11 and the single-pole single-throw switch b12 of the energy-saving network b1 to be turned off, that is, to keep the energy-saving network b1 in the non-saving state shown in FIG. 13a. The port 1 of the energy-saving network b1 obtains a signal of the power amplifier 1-1, and sends the signal to the port 4, so that each array antenna corresponding to the power amplifier 1-1 can obtain the signal. The port 2 of the energy-saving network b1 obtains a signal of the power amplifier 1-2, and sends the signal to the port 3. The phase shifter 3-b1 adjusts a phase of the output signal output by the port 3 (as shown in the embodiment shown in FIG. 10, and details are not described herein again), so that each array antenna corresponding to the power amplifier 1-2 can obtain the signal.

When a quantity of current users within a coverage area of the base station falls within a second user interval, a half of power amplifiers are turned off, for example, the power amplifier 1-2 is turned off, and a turn-on signal is sent to the single-pole single-throw switch b11 and the single-pole single-throw switch b12, to control the single-pole single-throw switch b11 and the single-pole single-throw switch b12 of the energy-saving network b1 to be turned on, that is, to keep the energy-saving network b1 to switch to the energy-saving state shown in FIG. 13b.

The following uses the array antenna a1 as an example to describe a manner in which the array antenna a1 obtains a signal.

The energy-saving network b1 obtains an output signal of the power amplifier 1-1, equally splits the signal into two signal paths, adjusts a phase of an output signal output by the port 3 of the energy-saving network b1 via the phase shifter 3-a1 of the port 3 (as shown in the embodiment shown in FIG. 10, and details are not described herein again), and sends the adjusted signal to the array antenna a1.

It may be understood that a manner in which other array antennas corresponding to the power amplifier 1-1 and the power amplifier 1-2 obtain a signal is the same as a manner in which the array antenna a1 obtains a signal. Details are not described herein again.

It may be understood that each feed network has a plurality of input ports and output ports. To be specific, each feed network in the horizontal dimension is connected to at least one feed network in the vertical dimension, and each feed network in the vertical dimension feeds at least one array antenna. The foregoing method describes a method for sending a signal to a part of array antennas, and a method for sending a signal to another array antenna is the same as the foregoing method. Details are not described herein again.

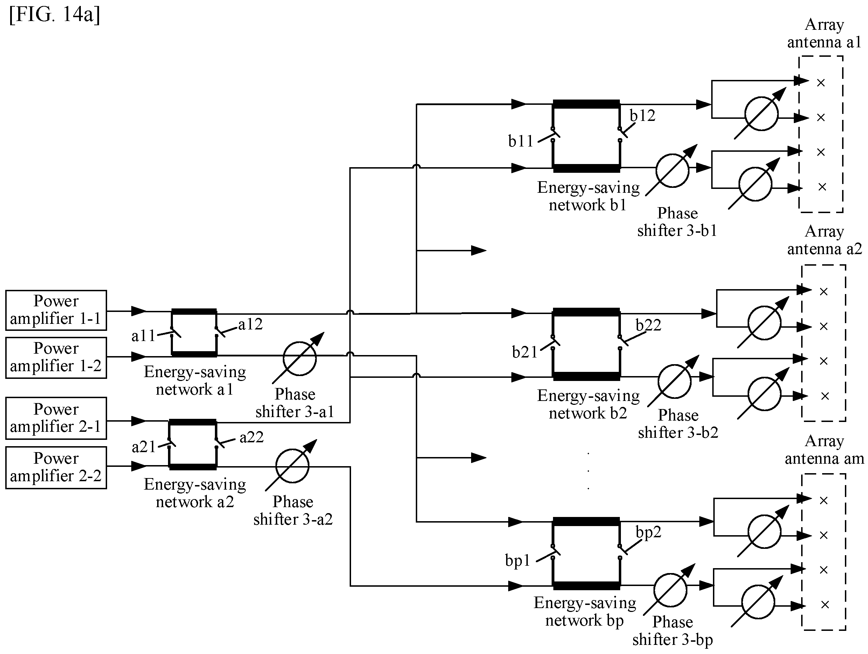

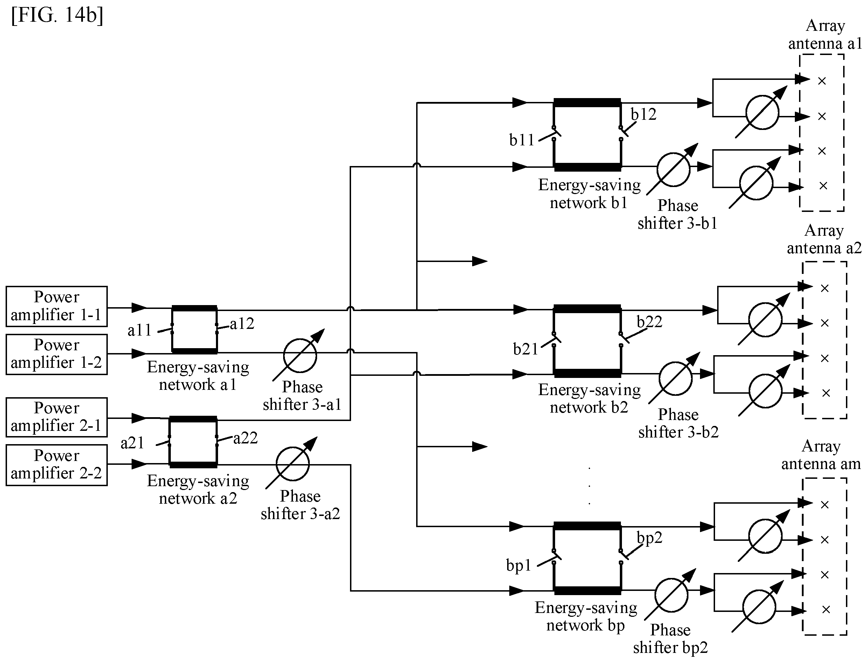

The following describes, with reference to FIG. 14a and FIG. 14b by using an example in which an energy-saving network is disposed between the power amplifier and the feed network in the horizontal dimension and an energy-saving network is disposed between the feed network in the horizontal dimension and the feed network in the vertical dimension, a method for controlling, based on an output voltage of the power amplifier connected to the energy-saving network, the energy-saving network to switch between an energy-saving state and a non-energy-saving state, to ensure that a beam sweeping range of the antenna array remains unchanged. A difference between FIG. 14a and FIG. 6b lies in that the port 3 of the energy-saving network a1 is connected to the phase shifter 3-a1, the port 3 of the energy-saving network b1 is connected to a phase shifter 3-b1, and both the energy-saving network a1 and the energy-saving network b1 in FIG. 14a are in a non-energy-saving state.

When a quantity of current users within a coverage area of the base station falls within the fourth user interval, both the power amplifier 1-1 and the power amplifier 1-2 are turned on, and a turn-off signal is sent to a single-pole single-throw switch b11 and a single-pole single-throw switch b12, to control the single-pole single-throw switch b11 and the single-pole single-throw switch b12 of the energy-saving network b1 to be turned off, that is, to keep the energy-saving network a1, the energy-saving network a2, the energy-saving network b1, the energy-saving network b2, ..., and the energy-saving network bp in the non-saving state shown in FIG. 14a. One input end of the energy-saving network a1 obtains a signal of the power amplifier 1-1, and sends the signal to the input ends of the energy-saving network b1, the energy-saving network b2, ..., and the energy-saving network bp, so that each array antenna corresponding to the power amplifier 1-1 can obtain the signal. The other input end of the energy-saving network a1 obtains a signal of the power amplifier 1-2, and sends the signal to the other output end. The phase shifter 3-a1 adjusts a phase of the output signal (as shown in the embodiment shown in FIG. 10, and details are not described herein again), and then the signal is sent to the input ends of the energy-saving network b1, the energy-saving network b2, ..., and the energy-saving network bp, so that each array antenna corresponding to the power amplifier 1-2 can obtain the signal.

When a quantity of current users within a coverage area of the base station is in the second user interval, a half of power amplifiers are turned off, for example, the power amplifier 1-1 and the power amplifier 2-1 are turned off, and a turn-on signal is sent to the single-pole single-throw switch a11, the single-pole single-throw switch a12, a single-pole single-throw switch a21, and a single-pole single-throw switch a22, to control the single-pole single-throw switch a11 and the single-pole single-throw switch a12 of the energy-saving network a1 to be turned on, and control the single-pole single-throw switch a21 and the single-pole single-throw switch a22 of the energy-saving network a2 to be turned on, that is, the energy-saving network a1 and the energy-saving network a2 are switched to the energy-saving state shown in FIG. 14b. The energy-saving network a1 obtains an output signal of a power amplifier (power amplifier 1-2) in a turned-on state. The energy-saving network a1 equally splits one signal sent by the power amplifier 1-2 into two signal paths, and then sends the signals to the input ends of the energy-saving network b1, the energy-saving network b2, ..., and the energy-saving network bp through the output ends of the energy-saving network a1. The energy-saving network a2 equally splits one signal sent by the power amplifier 2-2 into two signal paths, and sends the signals to the input ends of the energy-saving network b1, the energy-saving network b2, ..., and the energy-saving network bp through the output ends of the energy-saving network a2, so that the array antenna a1, the array antenna a2, ..., and the array antenna am can all obtain the signal. For the method for sending the input ends of the energy-saving network b1, the energy-saving network b2, ..., and the energy-saving network bp by the energy-saving network a1 and the energy-saving network a2, refer to the foregoing embodiments. Details are not described herein again.

It may be understood that each feed network has a plurality of input ports and output ports. To be specific, each feed network in the horizontal dimension is connected to at least one feed network in the vertical dimension, and each feed network in the vertical dimension feeds at least one array antenna. The foregoing method describes a method for sending a signal to a part of array antennas, and a method for sending a signal to another array antenna is the same as the foregoing method. Details are not described herein again.

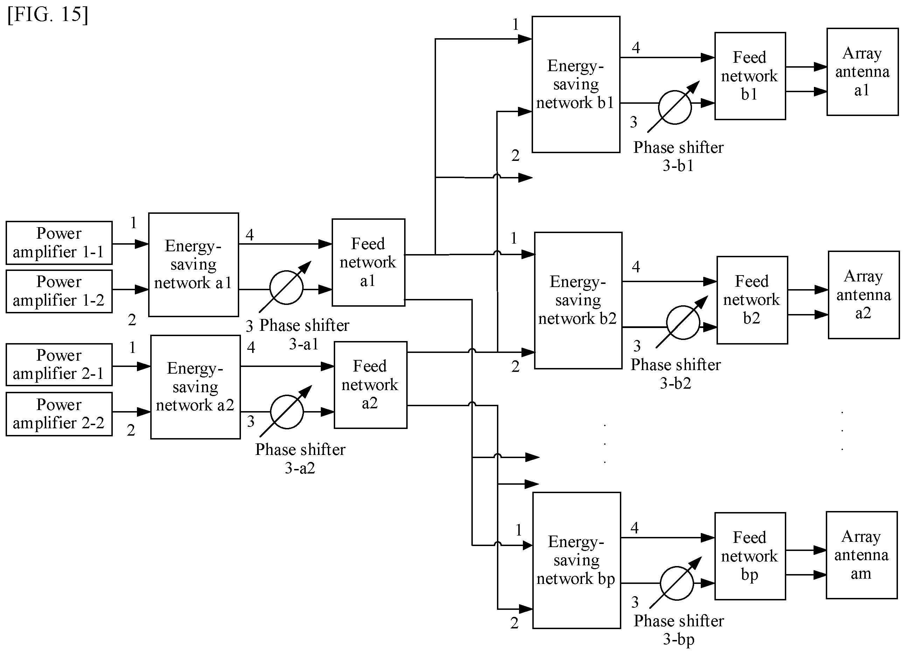

The following describes, with reference to FIG. 15 by using an example in which an energy-saving network is disposed between the power amplifier and the feed network in the horizontal dimension and an energy-saving network is disposed between the feed network in the horizontal dimension and the feed network in the vertical dimension, a method for controlling, based on an output voltage of the power amplifier connected to the energy-saving network, the energy-saving network to switch between an energy-saving state and a non-energy-saving state, to ensure that a beam sweeping range of the antenna array remains unchanged. A difference between FIG. 15 and FIG. 7a lies in that the port 3 of the energy-saving network a1 is connected to the phase shifter 3-a1, the port 3 of the energy-saving network a2 is connected to a phase shifter 3-a2, the port 3 of the energy-saving network b1 is connected to the phase shifter 3-b1, the port 3 of the energy-saving network b2 is connected to a phase shifter 3-b2, ..., and the port 3 of the energy-saving network bp is connected to a phase shifter 3-bp.

When a quantity of current users within a coverage area of the base station falls within the fourth user interval, the power amplifier 1-1, the power amplifier 1-2, the power amplifier 2-1, and the power amplifier 2-2 are all turned on, and a turn-off signal is sent to the energy-saving network a1, the energy-saving network a2, the energy-saving network b1, the energy-saving network b2, ..., and the energy-saving network bp, to control the energy-saving network a1, the energy-saving network a2, the energy-saving network b1, the energy-saving network b2, ..., and the energy-saving network bp to keep in a non-saving state. For a manner in which the energy-saving network a1, the energy-saving network a2, the energy-saving network b1, the energy-saving network b2, ..., and the energy-saving network bp obtain a signal and transmit the signal to respective array antennas, refer to the embodiment corresponding to FIG. 14a. Details are not described herein again.

When a quantity of current users within a coverage area of the base station falls within the second user interval, a half of power amplifiers are turned off, for example, the power amplifier 1-1 and the power amplifier 2-1 are turned off, and a turn-on signal is sent to the energy-saving network a1, the energy-saving network a2, the energy-saving network b1, the energy-saving network b2, ..., and the energy-saving network bp, to control the energy-saving network a1 and the energy-saving network a2 to be in an energy-saving mode. For a manner in which the energy-saving network a1, the energy-saving network a2, the energy-saving network b1, the energy-saving network b2, ..., and the energy-saving network bp obtain a signal and transmit the signal to respective array antennas, refer to the embodiment corresponding to FIG. 7a. Details are not described herein again.

It may be understood that each feed network has a plurality of input ports and output ports. To be specific, each feed network in the horizontal dimension is connected to at least one feed network in the vertical dimension, and each feed network in the vertical dimension feeds at least one array antenna. The foregoing method describes a method for sending a signal to a part of array antennas, and a method for sending a signal to another array antenna is the same as the foregoing method. Details are not described herein again.

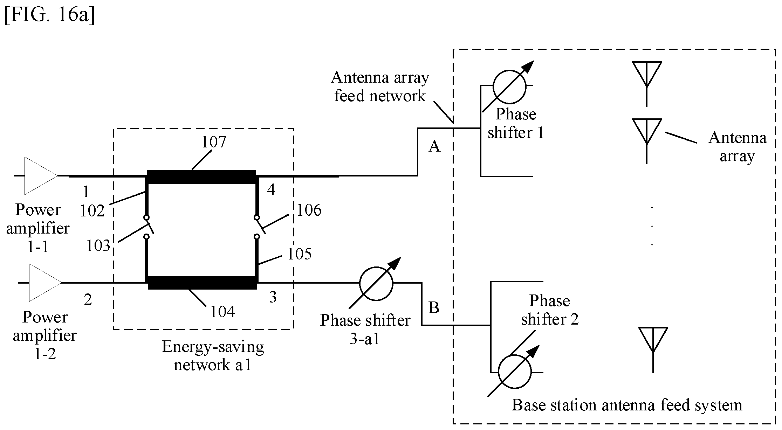

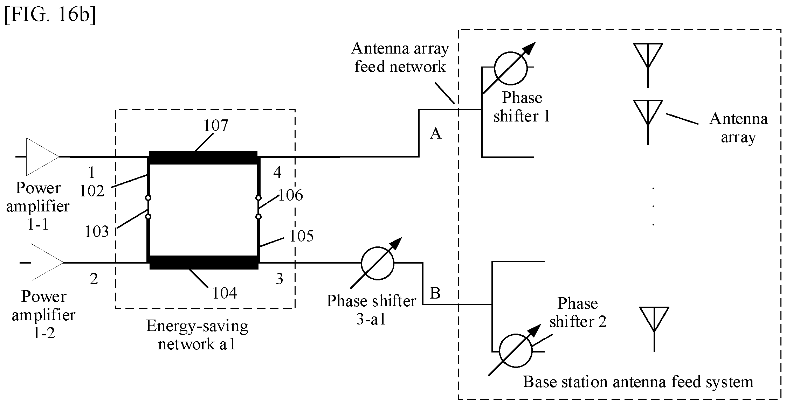

The following describes, with reference to FIG. 16a and FIG. 16b by using an example in which the energy-saving network is located between the base station antenna feed system and a front-end power amplifier of the antenna array, a method for controlling, based on an output voltage of the power amplifier connected to the energy-saving network, the energy-saving network to switch between an energy-saving state and a non-energy-saving state, to ensure that a beam sweeping range of the antenna array remains unchanged.

When an output voltage of a power amplifier that is in a turned-on state and connected to the energy-saving network a1 meets a voltage threshold, for example, when the power amplifier 1-1 and the power amplifier 1-2 operate at full power, that is, when signals are output at the same time, a turn-on signal is sent to the energy-saving network, so that the energy-saving network keeps in the non-energy-saving state shown in FIG. 16a. As shown in FIG. 16a, an output end of the power amplifier 1-1 is connected to the port 1 of the energy-saving network a1, and an output end of the power amplifier 1-2 is connected to the port 2 of the energy-saving network a1. The port 3 of the energy-saving network a1 is connected to the phase shifter 3-a1, the phase shifter 3-a1 is connected to a port B of the feed network, the port 4 is connected to a port A of the feed network, the single-pole single-throw switch 103 between the port 1 and the port 2 is turned off, and the single-pole single-throw switch 106 between the port 3 and the port 4 is turned off.

The port 1 obtains output power of the power amplifier 1-1, the port 4 outputs the output power to the port A of the feed network, and then the output power is input to the antenna array after the phase shifter 1 performs phase shift; and the port 2 obtains output power of the power amplifier 1-2, the port 3 outputs the output power to the phase shifter 3-a1, and the phase shifter 3-a1 adjusts a phase of an output signal output by the port 3 (as shown in the embodiment shown in FIG. 10, and details are not described herein again), so that the antenna array generates a plurality of beam directions in cooperation with a phase shifter (for example, phase shifter 2) in a back-end antenna array feed network.

When an output voltage of a power amplifier that is in a turned-on state and connected to the energy-saving network a1 does not meet the voltage threshold, if only the power amplifier 1-1 is turned on, a turn-on signal is sent to the energy-saving network, to turn on the single-pole single-throw switch 103 and the single-pole single-throw switch 106 of the energy-saving network, and control the energy-saving network to be in the energy-saving state shown in FIG. 16b. As shown in FIG. 16b, the single-pole single-throw switch 103 between the port 1 and the port 2 is turned on, and the single-pole single-throw switch 106 between the port 3 and the port 4 is turned on.

The output power of the power amplifier 1-1 is evenly distributed to the port 3 and the port 4 through the port 1 of the energy-saving network a1, and then the phase shifter 3-a1 adjusts a phase of the output signal output by the port 3, so that the antenna array generates a plurality of beam directions in cooperation with the phase shifter (for example, the phase shifter 1 and the phase shifter 2) in the antenna array feed network. Therefore, it is ensured that a beam sweeping range of the antenna array remains unchanged regardless of whether the energy-saving network is in the energy-saving state or the non-energy-saving state.

In embodiments of this application, resistance values of the bridge arm 104 and the bridge arm 107 are the same, resistance values of the bridge arm 102 and the bridge arm 105 are the same, and a ratio of the resistance value of the bridge arm 104 (or the bridge arm 107) to the resistance value of the bridge arm 102 (the bridge arm 105) meets 1:. In embodiments of this application, lengths of the bridge arm 104 and the bridge arm 107 are both quarter-wavelength transmission lines of 35.35 Ω as shown in FIG. 12, and lengths of the bridge arm 102 and the bridge arm 105 are both eighth-wavelength transmission lines of 50 Ω as shown in FIG. 12. The feeder 101 is 50 Ω.

It may be understood that an implementation form of the energy-saving network in embodiments of this application is not limited, and the energy-saving network may be formed by a microstrip, a coaxial cable, a modular component, or the like.

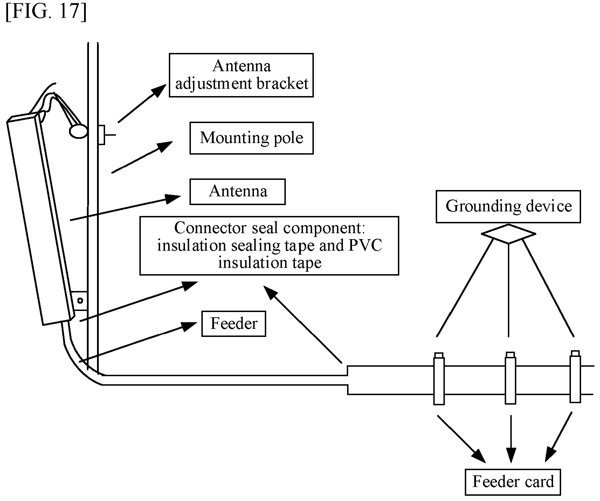

The following describes a base station antenna feed system in this application with reference to FIG. 17. As shown in FIG. 17, the base station antenna feed system includes an antenna and a feeder system. The antenna is configured to receive and transmit signals. Common antennas include single-polarized antennas, dual-polarized antennas, and omnidirectional antennas. The feeder system includes an antenna adjustment bracket, a mounting pole, a feeder, a connector sealing component, a grounding device, and a feeder card. The feeder system is configured to transmit signals to an antenna, to implement communication between antenna mobile devices.

The antenna adjustment bracket in the feeder system is configured to adjust a tilt angle of the antenna. The mounting pole is configured to hoist the antenna. The feeder is configured to transmit signals, and has transmission characteristics such as uniform characteristic impedance and high return loss. The connector sealing component includes insulation sealing tape and PVC insulation tape, and is configured to seal connectors at both ends of an outdoor jumper that connects the antenna and a main feeder. The grounding device is used for lightning protection and current discharge. The feeder card is used for outdoor lightning protection and grounding.

It may be understood that the antenna is located in a radome, and the antenna includes at least one independent array formed by a radiating element and a metal reflection panel. Frequencies of radiating elements may be the same or different, and the radiating elements are usually placed above the metal reflection panel. The arrays may receive or transmit radio frequency signals through respective feed networks. The feed network may implement different radiation beam directions through a drive component, or may be connected to a calibration network to obtain a calibration signal required by the system. In addition to the phase-shift network, the feed network may further include modules such as a combiner and a filter that are used to extend performance.

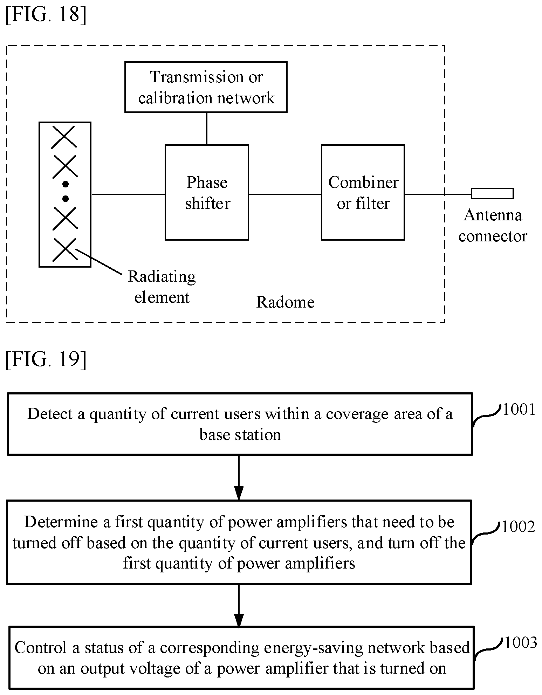

It may be understood that performance of the antenna directly affects performance of the entire base station antenna feed system and plays a decisive role. The following describes an internal structure of the antenna in FIG. 17 with reference to FIG. 18.

FIG. 18 is a diagram of an architecture of an antenna. The antenna includes a radome and an antenna connector. The radome (that is, the antenna shown in FIG. 17) houses a feed network and at least one independent array formed by a radiating element and a metal reflection panel (not shown in the figure). The feed network includes a transmission or calibration network, a phase shifter, a combiner, or a filter.

The radiating element is a unit that forms a basic structure of the antenna, and is configured to receive and transmit a signal. Antennas (or antenna arrays) formed by radiating elements may receive or transmit signals through respective feed networks. The feed network is configured to implement different radiation beam directions through a drive component, or may be connected to a calibration network to obtain a calibration signal required by the base station antenna feed system. In addition to the phase shifter, the feed network may further include modules such as a combiner and a filter that are used to extend performance.

The following describes in detail the control method provided in embodiments of this application. The control method in embodiments of this application is applied to the base station antenna feed system shown in FIG. 17. FIG. 19 is a schematic flowchart of a control method according to an embodiment of this application. The method includes the following steps.

1001: Detect a quantity of current users within a coverage area of a base station.

In embodiments of this application, the quantity of current users within the coverage area of the base station may be counted based on base station signaling data. For example, signaling data is periodically sent to a mobile core network, including data such as location information, call status, and call duration of each user. By analyzing and processing the data, the quantity of current users within the coverage area of the base station may be obtained.

In some embodiments, network data traffic may be further obtained, and statistics about the quantity of current users within the coverage area of the base station are collected based on the network data traffic. For example, network data traffic of a user within the signal coverage area of a base station is obtained, including upload traffic and download traffic of the user. By analyzing and processing the data, network data traffic statistics of the base station may be obtained, and then a quantity of current users within the coverage area of the base station is determined based on the network data traffic statistics.

1002: Determine a first quantity of power amplifiers that need to be turned off based on the quantity of current users, and turn off the first quantity of power amplifiers.

In embodiments of this application, during running of the base station, the first quantity of power amplifiers that need to be turned off may be determined based on the quantity of current users and a preset policy.

For example, when the quantity of current users falls within a first user interval, one quarter of power amplifiers are turned off; when the quantity of current users falls within a second user interval, a half of power amplifiers are turned off; when the quantity of current users falls within a third user interval, three quarters of power amplifiers are turned off; and when the quantity of current users falls within a fourth user interval, no power amplifiers are turned off. A lower limit value of the fourth interval is greater than an upper limit value of the first interval, a lower limit value of the first interval is greater than an upper limit value of the second interval, and a lower limit value of the second interval is greater than an upper limit value of the third interval.

It may be understood that a power amplifier in the base station may be located between a power amplifier and a feed network in a horizontal dimension, or may be located between a feed network in a horizontal dimension and a feed network in a vertical dimension, or may be located between a power amplifier and a feed network in a horizontal dimension, or may be located between a feed network in a horizontal dimension and a feed network in a vertical dimension.

It can be understood that, when one quarter of power amplifiers are turned off, the base station is in a three-quarters power state; when one half of the power amplifiers are turned off, the base station is in a one-half power state; when three quarters of power amplifiers are turned off, the base station is in a one-quarter power state; and when the power amplifiers are not turned off, the base station is in a full power state.

1003: Control a status of a corresponding energy-saving network based on an output voltage of a power amplifier that is turned on.

In embodiments of this application, after the first quantity of power amplifiers are turned off, output power of a power amplifier that is turned on and connected to the energy-saving network may be obtained. When it is determined that an output voltage of the power amplifier that is connected to the energy-saving network and in a turned-on state does not meet a voltage threshold, the energy-saving network is controlled to be in the energy-saving state shown in FIG. 9b; or when an output voltage of the power amplifier that is connected to the energy-saving network and in the turned-on state meets the voltage threshold, the energy-saving network is controlled to be in the non-energy-saving state shown in FIG. 9a. For a method for transmitting a signal when the energy-saving network is in the energy-saving state and the non-energy-saving state, refer to the embodiments shown in FIG. 4a to FIG. 7b and FIG. 11a to FIG. 16b. Details are not described herein again.

It may be understood that a horizontal plane direction of an antenna aperture is also referred to as a transverse direction or a forward direction, and is a normal direction of the antenna aperture, and is a main radiation direction of the antenna. A vertical plane direction of the antenna aperture is also referred to as a vertical direction, and is a length direction of each array of the antenna, and is a direction that is basically perpendicular to the ground.

In embodiments of this application, a turn-on status of a power amplifier in the base station may be controlled based on a quantity of current users within the coverage area of the base station antenna, so that transmit power of the base station antenna is flexibly configured based on the quantity of users. For example, a part of power amplifiers are turned off when there are a small quantity of users, thereby reducing energy consumption. A single-pole single-throw switch in the energy-saving network is controlled to be turned on and/or turned off based on the output voltage of the power amplifier connected to the energy-saving network, to implement switching between the energy-saving state and the non-energy-saving state of the energy-saving network, and evenly distribute output power of one or two power amplifiers to the antenna array through the energy-saving network, so that the antenna array always operates as a full array regardless of whether the energy-saving network is in the energy-saving state or the non-saving state, and an antenna beam coverage area remains consistent before and after, thereby ensuring user communication quality while achieving energy saving.

Embodiments of a mechanism disclosed in this application may be implemented in hardware, software, firmware, or a combination of these implementation methods. Embodiments of this application may be implemented as a computer program or program code executed in a programmable system. The programmable system includes at least one processor, a storage system (including a volatile memory, a non-volatile memory, and/or a storage element), at least one input device, and at least one output device.

The program code may be applied to input instructions to perform the functions described in this application and generate output information. The output information may be applied to one or more output devices in a known manner. For purposes of this application, a processing system includes any system having a processor, for example, a digital signal processor (digital signal processor, DSP), a microcontroller, an application-specific integrated circuit (application-specific integrated circuit, ASIC), or a microprocessor.

The program code may be implemented in a high-level programming language or an object-oriented programming language to communicate with the processing system. The program code can also be implemented in an assembly language or a machine language when needed. The mechanisms described in this application are not limited to the scope of any particular programming language. In any case, the language may be a compiled language or an interpretive language.

In some cases, the disclosed embodiments may be implemented in hardware, firmware, software, or any combination thereof. The disclosed embodiments may alternatively be implemented as instructions that are carried or stored on one or more transitory or non-transitory machine-readable (for example, computer-readable) storage media and that may be read and executed by one or more processors. For example, the instructions may be distributed over a network or through another computer-readable medium. Therefore, the machine-readable medium may include any mechanism for storing or transmitting information in a machine (for example, a computer) readable form, including, but not limited to, a floppy disk, a compact disc, an optical disc, a read-only memory (compact disc read-only memory, CD-ROM), a magnetic optical disc, a read-only memory (read-only memory, ROM), a random access memory (random access memory, RAM), an erasable programmable read-only memory (erasable programmable read-only memory, EPROM), an electrically erasable programmable read-only memory (electrically erasable programmable read-only memory, EEPROM), a magnetic or optical card, a flash memory, or a tangible machine-readable memory for transmitting information (for example, a carrier wave, an infrared signal, and a digital signal) through Internet in electrical, optical, acoustic, or other forms. Therefore, the machine-readable medium includes any type of machine-readable medium that is suitable for storing or transmitting electronic instructions or information in a machine-readable (for example, a computer-readable) form.

In the accompanying drawings, some structural or method features may be shown in a particular arrangement and/or order. However, it should be understood that such a particular arrangement and/or order may not be needed. In some embodiments, these features may be arranged in a manner and/or order different from those/that shown in the descriptive accompanying drawings. In addition, inclusion of the structural or method features in a particular figure does not imply that such features are needed in all embodiments, and in some embodiments, these features may not be included or may be combined with other features.

It should be noted that all units/modules mentioned in device embodiments of this application are logical units/modules. Physically, one logical unit/module may be one physical unit/module, may be a part of one physical unit/module, or may be implemented by using a combination of a plurality of physical units/modules. Physical implementations of these logical units/modules are not the most important, and a combination of functions implemented by these logical units/modules is a key to resolve the technical problem provided in this application. In addition, to highlight an innovative part of this application, a unit/module that is not closely related to resolving the technical problem provided in this application is not introduced in the foregoing device embodiments of this application. This does not mean that there are no other units/modules in the foregoing device embodiments.

It should be noted that, in the examples and the specification of the patent, the terms "include" and "have" and any variants thereof are intended to cover a non-exclusive inclusion, so that a process, a method, an article, or a device that includes a list of elements not only includes those elements but also includes other elements that are not expressly listed, or further includes elements inherent to such a process, method, article, or device. Without further limitations, an element limited by "include a/an" does not exclude other same elements existing in the process, the method, the article, or the device which includes the element.

Although this application has been illustrated and described with reference to some preferred embodiments of this application, a person of ordinary skill in the art should understand that various changes may be made to this application in form and detail without departing from the spirit and scope of this application.

## Claims

1. A communication device, comprising a first power amplifier unit, a first distribution unit, and a first feed unit, wherein
the first power amplifier unit comprises a first power amplifier and a second power amplifier;
the first distribution unit is connected to a first feed network and a second feed network in the first feed unit; and
the first distribution unit is configured to: when the first power amplifier is turned off, split a signal output by the second power amplifier into two signal paths, and input the two signal paths to the first feed network and the second feed network in the first feed unit, respectively.

2. The communication device according to claim 1, wherein the first distribution unit comprises a 90° hybrid coupler, and
the 90° hybrid coupler is configured to equally split a signal output by the second power amplifier into two signal paths, and input the two signal paths to the first feed network and the second feed network in the first feed unit, respectively.

3. The communication device according to claim 2, wherein the 90° hybrid coupler is in a connected state when the first power amplifier is turned off, and
in the connected state of the 90° hybrid coupler, a signal output by the second power amplifier is equally split into two signal paths, and the two signal paths are input to the first feed network and the second feed network in the feed unit, respectively; or the 90° hybrid coupler is in a disconnected state when both the first power amplifier and the second power amplifier are in operation, and
when the 90° hybrid coupler is in the disconnected state, a signal output by the first power amplifier is input to the first feed network, and a signal output by the second power amplifier is input to the second feed network.

4. The communication device according to claim 3, wherein the 90° hybrid coupler further comprises a first switch and a second switch;
when the first power amplifier is turned off and the second power amplifier is in operation:
a voltage across the first switch is greater than a turn-on voltage of the first switch, and the first switch is in a turned-on state, and
a voltage across the second switch is greater than a turn-on voltage of the second switch, and the second switch is in a turned-on state; or
when both the first power amplifier and the second power amplifier are in operation:
a voltage across the first switch is less than or equal to a turn-on voltage of the first switch, and the first switch is in a turned-off state, and
a voltage across the second switch is less than or equal to a turn-on voltage of the second switch, and the second switch is in a turned-off state.

5. The communication device according to claim 4, wherein the first switch and the second switch comprise at least one of a MOS transistor, a diode, a micro-electromechanical system, or a reed switch.

6. The communication device according to claim 1, further comprising an antenna array, wherein the antenna array comprises a first-direction antenna element and a second-direction antenna element, and the first-direction antenna element and the second-direction antenna element comprise a plurality of antennas.

7. The communication device according to claim 6, wherein the first power amplifier and the second power amplifier in the first power amplifier unit are connected to a first input end and a second input end of the first distribution unit, respectively;
the first feed network is connected to a first output end of the first distribution unit; and
the second feed network is connected to a second output end of the first distribution unit.

8. The communication device according to claim 7, further comprising a second feed unit, wherein the second feed unit comprises a third feed network and a fourth feed network, the third feed network is connected to the first feed network, and the fourth feed network is connected to the second feed network;
the first feed network and the second feed network are connected to different first-direction antenna elements in the antenna array, respectively; and
the third feed network and the fourth feed network are connected to different second-direction antenna elements in the antenna array, respectively.

9. The communication device according to claim 6, further comprising a third feed unit, wherein the third feed unit comprises a fifth feed network and a sixth feed network; the first power amplifier in the first power amplifier unit is connected to the fifth feed network, the fifth feed network is connected to a first input end of the first distribution unit, and the first feed network is connected to a first output end of the first distribution unit; and
the second power amplifier in the first power amplifier unit is connected to the sixth feed network, the sixth feed network is connected to a second input end of the first distribution unit, and the first feed network is connected to a second output end of the first distribution unit.

10. The communication device according to claim 9, wherein
the first feed network and the second feed network are connected to different second-direction antenna elements in the antenna array, respectively; and
the fifth feed network and the sixth feed network are connected to different first-direction antenna elements in the antenna array, respectively.

11. The communication device according to claim 6, further comprising a second distribution unit and a fourth feed unit, wherein the fourth feed unit comprises a seventh feed network and an eighth feed network;
the first power amplifier in the first power amplifier unit is connected to a first input end of the first distribution unit, and the second power amplifier in the first power amplifier unit is connected to a second input end of the first distribution unit;
the first feed network in the first feed unit is connected to a first output end of the first distribution unit, and the second feed network in the first feed unit is connected to a second output end of the first distribution unit;
the first feed network in the first feed unit is connected to a first input end of the second distribution unit, and the second feed network in the first feed unit is connected to a second input end of the second distribution unit; and
the seventh feed network in the fourth feed unit is connected to a first output end of the second distribution unit, and the eighth feed network in the fourth feed unit is connected to a second output end of the second distribution unit.

12. The communication device according to claim 11, wherein
the first feed network and the second feed network are connected to different first-direction antenna elements in the antenna array, respectively; and
the seventh feed network and the eighth feed network are connected to different second-direction antenna elements in the antenna array, respectively.

13. The communication device according to claim 1, wherein the first distribution unit comprises a phase shifter.

14. A communication control method, applied to the communication device according to any one of claims 1 to 13, comprising:
obtaining a quantity of users within a signal coverage area of the communication device;
turning off a part of power amplifiers in the first power amplifier unit based on the quantity of users, wherein the first power amplifier unit comprises the first power amplifier and the second power amplifier; and
when the first power amplifier is turned off, splitting, via the first distribution unit, a signal output by the second power amplifier into two signal paths, and inputting the two signal paths to the first feed network and the second feed network in the first feed unit, respectively.

15. An electronic device, comprising: a memory, configured to store instructions to be executed by one or more processors of the electronic device; and the processor, being one of the one or more processors of the electronic device, configured to perform the communication control method according to claim 14.

16. A readable medium, wherein the readable medium stores instructions, and when executed on an electronic device, the instructions cause the electronic device to perform the communication control method according to claim 14.
